(19) **Europäisches Patentamt / European Patent Office / Office européen des brevets**

(11) **EP 3 454 554 A1**

(12) **EUROPEAN PATENT APPLICATION**
published in accordance with Art. 153(4) EPC

(43) Date of publication:
**13.03.2019 Bulletin 2019/11**

(21) Application number: **17795493.0**

(22) Date of filing: **05.05.2017**

(51) Int Cl.:
**H04N 17/00** (2006.01)   **G06F 3/0481** (2013.01)
**G06T 3/00** (2006.01)   **H04N 19/597** (2014.01)
**H04N 19/154** (2014.01)

(86) International application number:
**PCT/CN2017/083264**

(87) International publication number:
**WO 2017/193875 (16.11.2017 Gazette 2017/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **07.05.2016 CN 201610301953**

(71) Applicant: **Zhejiang University**
**Hangzhou, Zhejiang 310058 (CN)**

(72) Inventors:
• **YU, Lu**
  **Hangzhou**
  **Zhejiang 310058 (CN)**
• **SUN, Yule**
  **Hangzhou**
  **Zhejiang 310058 (CN)**
• **LU, Ang**
  **Hangzhou**
  **Zhejiang 310058 (CN)**

(74) Representative: **Cabinet Chaillot**
**16/20, avenue de l'Agent Sarre**
**B.P. 74**
**92703 Colombes Cedex (FR)**

(54) **METHOD AND DEVICE FOR EVALUATING QUALITY OF DIGITAL IMAGE**

(57)   This invention provides method and apparatus for quality evaluation of digital image to be used in the field of communication. The invention is used to tackle with the problem caused by the differences between the representation space of the digital image and the observation space. The digital image quality evaluation method calculates the objective quality of the digital image reflected in the observation space, while the calculation part is completed in the space to be evaluated. The digital image quality evaluation apparatus includes a distortion value generation module, a distortion value processing module, and a digital image quality evaluation module. The invention can provide a more accurate and fast objective quality calculation method in the observation space for the digital image in the space to be evaluated. The method of the invention is applied to digital image or digital sequence which can provide the accurate rate allocation scheme for the compression coding, and the coding performance can be greatly improved in the coding tool of digital image or digital video.

Figure 3

**Description**

**Technical field**

This patent belongs to the field of communication technology, and more specifically speaking, it is a method for evaluating the quality of a digital image in the case where the representation space of digital images is different from corresponding observation space.

**Background of the invention**

Essentially, digital image signal is a two-dimensional signal arranged in space. A window is utilized to collect pixel samples in the spatial domain to form a digital image. The images collected at different times are arranged in chronological order to form a moving digital image sequence. An important purpose of digital images is to be used for watching, and the objective quality evaluation of digital images affects the loss of compression, transmission and other process of digital images.

The role of the camera is to simulate the image observed by human eye in the corresponding position. The space of scene captured by camera is defined as observation space, which reflects the actual pictures captured by human eyes. But the space of observation space varies from its design to multi-camera system. Considering the convenience of signal processing, we usually project image expressed in the observation space to the representation space as the conversion to unify the signal format. Those images in the representation space are more convenient to be processed (the most common representation space is the two-dimensional plane).

For the conventional digital image, representation space is consistent with the observation space (the connection between the representation space and the presentation space can be established by affine transformation), meaning that the processing image is consistent with the observing image. Therefore, characteristics of the observation space need no extra processing when conventional digital images are processed. To evaluate the quality of a signal in the space to be evaluated, we need to specify a standard reference space to indicate the best signal. Then signal quality, the distortion of signal in the space to be evaluated, can be evaluated by comparing the difference between the signal in the representation space and the reference space.

For example, the objective quality of the basic processing unit $A_1$ in the digital image can be evaluated by the most popular objective quality evaluation method. As a distortion calculation method, it is based on the following assumptions that $A_1$ is corresponding to original reference $A_o$, then the objective quality (distortion), can be expressed as a difference function $Q=Diff(A_1,A_o)$per pixels belonging to $A_1$ and $A_o$. Where the difference function can be summing the absolute value of differences of each pixel belonging to $A_1$ and $A_o$, or may be the mean squared error of $A_1$ and $A_o$, or the peak signal-to-noise ratio of $A_1$ and $A_o$. The difference function is not limited to those mentioned above.

With the development of digital image and display technology, the digital image space we have observed is no longer limited to two-dimensional plane any more, Naked-eye 3D technology, panoramic digital image technology, 360-degree virtual reality technology and many other innovations have created various modes of presentation. In order to inherit the original digital image processing technology and simplify the difficulty to deal with digital image signal in high-dimensional space, usually high-dimensional signal will be converted to 2D plane through the projection transformation so that the signal can be processed in an easier way. (For example, video coding standard can only encode two-dimensional content for now. In order to cooperate with the current compression standard, a common operation is that project high-dimensional space to a two-dimensional plane, and then encode the two-dimensional content. During the process that images are mapped to the two-dimensional plane, areas at different positions of the two-dimensional images not only have corresponding relationship with images presented in high-dimensional space but also may have different degree of stretching. For example, current spherical video scene needs to be mapped to a rectangular area, a representation of the panorama image - equi rectangular projection (ERP) format is one choice. For ERP format, however, stretching deformation of dipolar areas is much larger than the equator areas, while in the spherical observation space each direction is isotropic.

With the introduction of new digital image display and presentation technology, the relationship between the representation space and the observation space of digital image is no longer linear. For the new application scenario, to evaluate the quality of a digital image sequence is no longer simply accumulating the differences of signal units in the representation space. When it comes to the digital images for observation, we pay more attention to the quality of digital images in the observation space. Quality of digital images can only be accurately evaluated if differences of each pixel in digital images are processed in the observation space.

Current technology requires specification of the type of observation space, and then uniform sampling will be operated in the observation space. Furthermore, locate corresponding points in the observation space of each pixel in the reference image and the image to be evaluated. Eventually, difference of pixels in the reference image and the image to be evaluated will be calculated based on those uniformly distribution points in the observation space. This method has following shortcomings: a) uniform sampling of the observation space is an extremely difficult problem, such as the spherical uniform sampling, usually the best we can get is approximate solution, and the calculation is complex; interpolation and other operations will be involved during the conversion process, which will introduce some error, unless interpolation method with better performance but much longer processing time is applied. The number of characterization pixels of the processing unit in the space to be evaluated can be different from reference space, meaning that it is difficult to determine the number of uniform points in the observation space.

**Summary of the invention**

To solve the technical problem mentioned above, the patent proposes an evaluation scheme for digital image quality based on an observation space. In this scheme, the relationship between the representation space and the observation space of the digital image cannot be represented by affine transformation.

Method and apparatus for digital image quality evaluation

The first technical solution of the present invention is to provide a digital image quality evaluation method for measuring the quality of a digital image in the space to be evaluated. This method comprising: summing the absolute value of the pixel values of the respective pixel group of the digital images in the space to be evaluated and the digital images in the reference space pixel by pixel to obtain the distortion values. The described pixel group comprises at least one of the following expressions:

a) one pixel;
b) one set of spatially continuous pixels in the space;
c) one set of temporally discontinuous pixels in the space.

The described method to obtain the absolute value of the digital images comprises at least one of the following processing methods:

a) converting the digital image in the space to be evaluated into the same space as the reference space, after calculating each difference of each pixel value between the corresponding pixel in the pixel group of the digital image in the space to be evaluated and the corresponding pixel in the pixel group of the digital image in the reference space, summing the absolute value of differences calculated before;
b) converting the digital image in the reference space into the same space as the space to be converted, after calculating each difference of each pixel value between the corresponding pixel in the pixel group of the digital image in the converted reference space and the corresponding pixel in the pixel group of the digital image in the space to be evaluated, summing the absolute value of differences calculated before;
c) converting the digital image in the reference space and the digital image in the space to be evaluated into the same space which is different from the observation space, after calculating each difference between the corresponding pixel value of the pixel group of the digital image in the converted reference space and the corresponding pixel value of the pixel group of the digital image in the space to be evaluated after conversion, summing the absolute value of differences calculated before;
d) in the case where the space to be evaluated is exactly same as the reference space, conversion is not necessary, after calculating each difference between the corresponding pixel value of the pixel group of the digital image in the space to be evaluated and the corresponding pixel value of the pixel group of the digital image in the reference space, summing the absolute value of differences calculated before.

The distortion values of the digital images in the space to be evaluated are processed according to the distribution of pixel groups in observation space. the method to process the distortion value of the digital images in the space to be evaluated according to the distribution of the pixel groups in observation space comprises at least one of the following processing methods:

a) projecting the relevant area corresponding to the pixel group of digital image in the space to be evaluated into the observation space and calculate the ratio of the corresponding area to the total area of the image in the observation space; calculating the result by multiplying the ratio and the distortion value;
b) projecting the relevant area corresponding to the pixel group of digital image in the space to be evaluated into the observation space corresponding to the pixel group of digital image in the reference space into the observation space and calculate the ratio of the corresponding area to the total area of the image in the observation space; calculating the result by multiplying the ratio and the distortion value.

The method to locate the relevant area corresponding to the pixel group comprises at least one of the following methods:

a) taking the area of three nearest pixel groups of this pixel group;
b) taking the area of four nearest pixel groups of the pixel group;
c) taking the area enclosed by three nearest pixel groups of the pixel group and the midpoints of these pixel groups;
d) taking the area enclosed by four nearest pixel groups of the pixel group and the midpoints of these pixel groups;
e) taking the area enclosed by the pixel group on each axis that does not exceed the unit distance between the pixels and the pixel group;
f) taking the area enclosed by the midpoint of the pixel group and the pixel group on each axis that does not exceed the unit distance between the pixels and the pixel group;
g) when the pixel group is one pixel, taking the area determined by the micro unit at the center point of the pixel.

The quality of the digital images in the space to be evaluated is measured by using the distortion value of the pixel groups of the entire digital image to be evaluated after the processing.

The second technical solution of the present invention is to provide a digital image quality evaluation apparatus for measuring the quality of a digital image in the space to be evaluated. This apparatus comprising: summing the absolute value of the pixel values of each pixel group of the digital image in the space to be evaluated and the digital image in the reference space pixel by pixel to obtain the distortion value. The described pixel group comprises at least one of the following expressions:

a) one pixel;
b) one set of spatially continuous pixels in the space;
c) one set of temporally discontinuous pixels in the space.

The input of the distortion generation module is the reference spatial digital image and the space to be evaluated and the output is distortion corresponding to the pixel group in the space to be evaluated. The method to obtain the absolute value of the digital image comprises at least one of the following processing methods:

a) converting the digital image in the space to be evaluated into the same space as the reference space, after calculating each difference between the corresponding pixel value of the pixel group of the digital image in the space to be evaluated and the corresponding pixel value of the pixel group of the digital image in the reference space, summing the absolute value of differences calculated before;
b) converting the digital image in the reference space into the same space as the space to be converted, after calculating each difference between the corresponding pixel value of the pixel group of the digital image in the converted reference space and the corresponding pixel value of the pixel group of the digital image in the space to be evaluated, summing the absolute value of differences calculated before;
c) converting the digital image in the reference space and the digital image in the space to be evaluated into the same space which is different with the observation space, after calculating each difference between the corresponding pixel value of the pixel group of the digital image in the converted reference space and the corresponding pixel value of the pixel group of the digital image in the space to be evaluated after conversion, summing the absolute value of differences calculated before;
d) in the case where the space to be evaluated is exactly same as the reference space, conversion is not necessary, after calculating each difference between the corresponding pixel value of the pixel group of the digital image in the space to be evaluated and the corresponding pixel value of the pixel group of the digital image in the reference space, summing the absolute value of differences calculated before.

A weighted distortion processing module processes the distortion value according to the distribution of the pixel group of the digital image in the space to be evaluated on the observation space, the input of which is the space to be evaluated and the output space is the corresponding weights of the pixel group in the space to be evaluated. The method to process the distortion value according to the distribution in the observation space of the pixel group of the digital image in the space to be evaluated comprises at least one of the following processing methods:

a) projecting the relevant area corresponding to the pixel group of digital image in the space to be evaluated into the observation space and calculate the ratio of the corresponding area to the total area of the image in the observation space; calculating the result by multiplying the ratio and the distortion value;
b) projecting the relevant area corresponding to the pixel group of digital image in the space to be evaluated into the observation space corresponding to the pixel group of digital image in the reference space into the observation space and calculate the ratio of the corresponding area to the total area of the image in the observation space; calculating the result by multiplying the ratio and the distortion value.

The method to locate the correlation area corresponding to the pixel group comprises at least one of the following methods:

a) taking the area of three nearest pixel groups of this pixel group;
b) taking the area of four nearest pixel groups of the pixel group;
c) taking the area enclosed by three nearest pixel groups of the pixel group and the midpoints of these pixel groups;
d) taking the area enclosed by four nearest pixel groups of the pixel group and the midpoints of these pixel groups;
e) taking the area enclosed by the pixel group on each axis that does not exceed the unit distance between the pixels and the pixel group;
f) taking the area enclosed by the midpoint of the pixel group and the pixel group on each axis that does not exceed the unit distance between the pixels and the pixel group;
g) when the pixel group is one pixel, taking the area determined by the micro unit at the center point of the pixel.

For the quality evaluation module, the processed distortion corresponding to the pixel group of the digital image of the entire image to be evaluated and the corresponding weights of the digital image are utilized to evaluate the quality of the digital image to be evaluated, the input of quality evaluation module is the corresponding weights of the pixel group and the distortion value corresponding to the pixel group in the space to be evaluated and output is the quality of the digital image in the observation space.

The third technical solution of the present invention is to provide a digital image quality evaluation method for measuring the quality of a digital image in the space to be evaluated. This method comprising: obtaining the distortion values of each pixel group in the digital image by using the pixel values of the respective pixel groups of the digital images in the space to be evaluated and reference space.

The method to obtain the distortion values of each pixel group in the digital image comprises at least one of the following processing methods:

a) converting the digital image in the space to be evaluated into the same space as the reference space, after calculating each difference between the corresponding pixel value of the pixel group of the digital image in the space to be evaluated and the corresponding pixel value of the pixel group of the digital image in the reference space, summing the absolute value of differences calculated before;
b) converting the digital image in the reference space into the same space as the space to be converted, after calculating each difference between the corresponding pixel value of the pixel group of the digital image in the converted reference space and the corresponding pixel value of the pixel group of the digital image in the space to be evaluated, summing the absolute value of differences calculated before;
c) converting the digital image in the reference space and the digital image in the space to be evaluated into the same space which is different with the observation space, after calculating each difference between the corresponding pixel value of the pixel group of the digital image in the converted reference space and the corresponding pixel value of the pixel group of the digital image in the space to be evaluated after conversion, summing the absolute value of differences calculated before;
d) in the case where the space to be evaluated is exactly the same as the reference space, conversion is not necessary; after calculating each difference between the corresponding pixel value of the pixel group of the digital image in the space to be evaluated and the corresponding pixel value of the pixel group of the digital image in the reference space, summing the absolute value of differences calculated before.

The distortion values of the pixel groups of the digital images in the space to be evaluated are processed according to the distribution in observation space. The method to process the distortion value of the pixel groups of the digital images in the space to be evaluated according to the distribution in observation space comprises at least one of the following processing methods:

a) projecting the relevant area corresponding to the pixel group of digital image in the space to be evaluated into the observation space and calculate the ratio of the corresponding area to the total area of the image in the observation space; calculating the result by multiplying the ratio and the distortion value, the result is the processed distortion value;
b) projecting the relevant area corresponding to the pixel group of digital image in the space to be evaluated into the observation space and calculate the stretching ratio of the pixel group of digital image in the space to be evaluated; calculating the result by multiplying the stretching ratio and the distortion value, the result is the processed distortion value.

The method to locate the relevant area corresponding to the pixel group comprises at least one of the following methods:

a) taking the area of three nearest pixel groups of this pixel group;
b) taking the area of four nearest pixel groups of the pixel group;
c) taking the area enclosed by three nearest pixel groups of the pixel group and the midpoints of these pixel groups;
d) taking the area enclosed by four nearest pixel groups of the pixel group and the midpoints of these pixel groups;
e) taking the area enclosed by the pixel group on each axis that does not exceed the unit distance between the pixels and the pixel group;
f) taking the area enclosed by the midpoint of the pixel group and the pixel group on each axis that does not exceed the unit distance between the pixels and the pixel group;
g) when the pixel group is one pixel, taking the area determined by the micro unit at the center point of the pixel.

The quality of the digital images in the space to be evaluated is measured by using the distortion value of the pixel group of the entire digital image to be evaluated after the processing.

The fourth technical solution of the present invention is to provide a digital image quality evaluation apparatus for measuring the quality of a digital image in the space to be evaluated. This apparatus comprising: the pixel values of each pixel group in the digital image to be evaluated is calculated pixel by pixel with the corresponding pixel values of the digital image in the reference space to obtain the distortion value, which is the distortion generation module; the input is the digital images in reference space and the space to be evaluated and the output is distortion values for the pixel group in the space to be evaluated.

The method to obtain the distortion value of the digital image in distortion generation module comprises at least one of the following processing methods:

a) converting the digital image in the space to be evaluated into the same space as the reference space, after calculating each difference between the corresponding pixel value of the pixel group of the digital image in the space to be evaluated and the corresponding pixel value of the pixel group of the digital image in the reference space, summing the absolute value of differences calculated before;
b) converting the digital image in the reference space into the same space as the space to be converted, after calculating each difference between the corresponding pixel value of the pixel group of the digital image in the converted reference space and the corresponding pixel value of the pixel group of the digital image in the space to be evaluated, summing the absolute value of differences calculated before;
c) converting the digital image in the reference space and the digital image in the space to be evaluated into the same space which is different with the observation space, after calculating each difference between the corresponding pixel value of the pixel group of the digital image in the converted reference space and the corresponding pixel value of the pixel group of the digital image in the space to be evaluated after conversion, summing the absolute value of differences calculated before;
d) in the case where the space to be evaluated is exactly the same as the reference space, conversion is not necessary; after calculating each difference between the corresponding pixel value of the pixel group of the digital image in the space to be evaluated and the corresponding pixel value of the pixel group of the digital image in the reference space, summing the absolute value of differences calculated before.

A weighted distortion processing module processes the distortion value of the pixel group of the digital image in the space to be evaluated according to the distribution in the observation space, the input of which are the distribution of pixel group in the digital image to be evaluated and the observation space and the output is the corresponding weights of the pixel group in the space to be evaluated. The method to obtain the result of quality evaluation in quality evaluation module comprises at least one of the following processing methods:

a) projecting the relevant area corresponding to the pixel group of digital image in the space to be evaluated into the observation space and calculate the ratio of the corresponding area to the total area of the image in the observation space; calculating the result by multiplying the ratio and the distortion value, the result is the processed distortion value;
b) projecting the relevant area corresponding to the pixel group of digital image in the space to be evaluated into the observation space and calculate the stretching ratio of the pixel group of digital image in the space to be evaluated; calculating the result by multiplying the stretching ratio and the distortion value, the result is the processed distortion value.

The method to locate the relevant area corresponding to the pixel group comprises at least one of the following methods:

a) taking the area of three nearest pixel groups of this pixel group;
b) taking the area of four nearest pixel groups of the pixel group;
c) taking the area enclosed by three nearest pixel groups of the pixel group and the midpoints of these pixel groups;
d) taking the area enclosed by four nearest pixel groups of the pixel group and the midpoints of these pixel groups;
e) taking the area enclosed by the pixel group on each axis that does not exceed the unit distance between the pixels and the pixel group;
f) taking the area enclosed by the midpoint of the pixel group and the pixel group on each axis that does not exceed the unit distance between the pixels and the pixel group;
g) when the pixel group is one pixel, taking the area determined by the micro unit at the center point of the pixel.

For the quality evaluation module, the processed distortion corresponding to the pixel group of the digital image of the entire image to be evaluated and the corresponding weights of the digital image are utilized to measure the quality of the digital image to be evaluated, input is the corresponding weights of the pixel group and the distortion value corresponding to the pixel group in the space to be evaluated and output is the quality of the digital image in the observation space.

Benefit of this invention is that the distribution of the corresponding processing unit in the observation space is introduced the evaluation of digital images quality in the representation space compared with the conventional technique. Compared with the prior methods, the problem caused by selection of points in observation space uniformly is avoided (uniform sampling on the sphere is an extremely difficult problem), which is converted to the problem of the area of the processing unit. The area can be calculated offline or online. What's more, this kind of design reduces the error introduced by the conversion between representation spaces. For the case where the representation space of the reference digital image $W_{rep}$ and the representation space of the digital image to be evaluated $W_t$ can be linearly represented, no conversion is required. But for the case where the representation space of the reference digital image $W_{rep}$ and the representation space of the digital image to be evaluated $W_t$ cannot be linearly represented, only one conversion is required. The conversion error is much smaller than the existing method (conversion between observation space of the digital image to be observed $W_o$ and the representation space of the digital image to be evaluated $W_t$ are required twice for every evaluation).

**Brief description of the drawings**

According to these figures, other features and advantages of the present invention will become more apparent from the following description of the selected embodiments as further introduction.

Drawings mentioned following provide a further understanding of the invention, which should also be treated as a part of this application, and the illustrative embodiments of the invention and its description are intended to account for the invention which will not construct limitations of the invention. For figures:

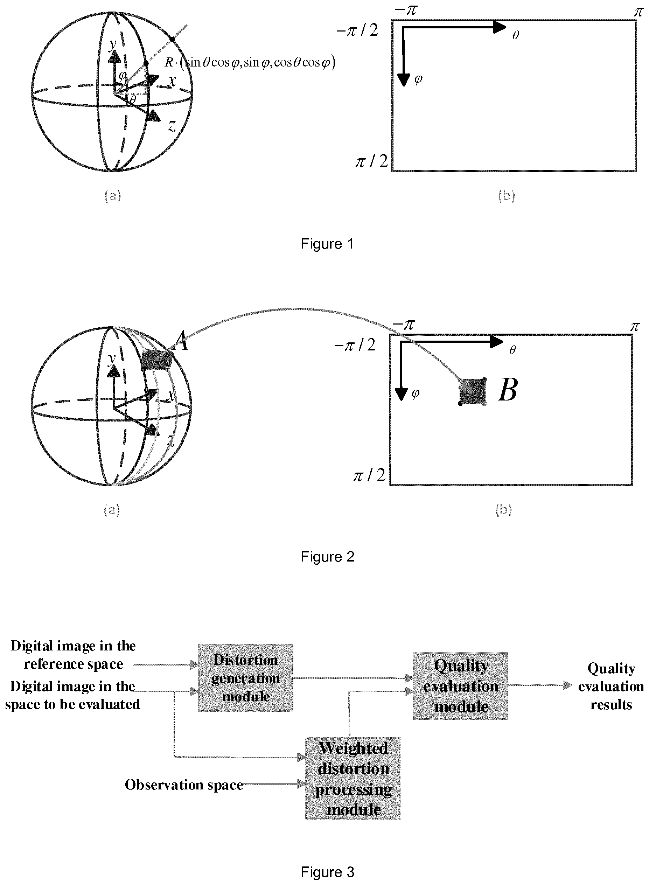

Figure 1 is a definition of the latitude and longitude diagram with respect to the sphere used in embodiments of the present invention;
Figure 2 is an illustration of the correspondence relationship of the latitude and longitude image to be evaluated and the sphere in the observation space in embodiments of the present invention;
Figure 3 is an illustration of structural relationship of digital image quality evaluation apparatus of the present invention;

**Detailed description of invention**

For the sake of simplicity of presentation, the processing units in the following embodiments may have different sizes and shapes, such as WxH rectangles, WxW squares, 1x1 single pixels, and other special shapes such as triangles, hexagons, etc. Each processing unit comprises only one image component (e.g., R or G or B, Y or U or V), and may comprise all components of one image. Last but not least, the processing unit here can not represent the entire image.

For the sake of simplicity of presentation, without loss of generality, observation space in the following embodiments are defined as a sphere. Followings are some typical mapping space.

For the sake of simplicity of presentation, the cube map projection (CMP) format in the following embodiments is defined as follows: a cube having exterior contact with the sphere is utilized to describe the spherical scene. Points on the cube are defined as the intersection of cube plane and lines starting from the center of the sphere and terminating on the point of the sphere. The point on the cube can specify the unique corresponding point on the sphere. This CMP format is represented by cube space.

For the sake of simplicity of presentation, the rectangular pyramid format in the following embodiments is defined as follows: a rectangular pyramid having exterior contact with the sphere is utilized to describe the spherical scene. Points on the rectangular pyramid are defined as the intersection of rectangular pyramid plane and lines starting from the center of the sphere and terminating on the point of the sphere. The point on the rectangular pyramid can specify the unique corresponding point on the sphere. This rectangular pyramid format is represented by rectangular pyramid space.

For the sake of simplicity of presentation, the N-face format in the following embodiments is defined as follows: a N-face having exterior contact with the sphere is utilized to describe the spherical scene. Points on the N-face are defined as the intersection of N-face plane and lines starting from the center of the sphere and terminating on the point of the sphere. The point on the N-face can specify the unique corresponding point on the sphere. This N-face format is represented by N-face space.

For the sake of simplicity of presentation, difference function $Diff(A_1, A_2)$ in embodiments is defined as followings: firstly, the precondition is that the representation space $W_1$ where $A_1$ belonging to must be linear to the representation space $W_2$ where $A_2$ belonging to and each pixel in $A_1$ must have unique corresponding pixel in $A_2$. Difference function $Diff(A_1, A_2)$ can be the sum of the absolute value of differences of each pixel belonging to $A_1$ and $A_2$, or may be the mean squared error of $A_1$ and $A_2$, or the peak signal-to-noise ratio of $A_1$ and $A_2$. The difference function is not limited to those mentioned above.

**Embodiment 1**

The first embodiment of the patent relates to a digital image quality evaluation method. Several basic definitions need to be made. The observation space $W_o$ to present observing digital images is a sphere. The representation space of digital images to be evaluated $W_t$ is equi rectangular projection (ERP) format. The representation space of reference digital images $W_{rep}$ is ERP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W'_{rep}$ to present images and space to be evaluated $W_t$ is converted to new space to be evaluated $W'_t$;

(2) One pixel $(\theta_o, \varphi_o)$ in reference space $W_{rep}$ is corresponding to $\left(\theta'_o, \varphi'_o\right)$ in the new reference space $W'_{rep}$, the corresponding processing unit $A_{ori}\left(\theta'_o, \varphi'_o, \Delta, \sigma\right)$ is presented as:

$$A_{ori}\left(\theta'_o, \varphi'_o, \Delta, \sigma\right) = \left\{ \left|\theta - \theta'_o\right| \leq \Delta, \left|\varphi - \varphi'_o\right| \leq \sigma \right\}$$

where $\Delta$ and $\sigma$ are constant, $\Delta$ is defined as half of unit length of $\theta$ axis of new reference space $W'_{rep}$, $\sigma$ is defined as half of unit length of $\varphi$ axis of new reference space $W'_{rep}$. For four peak $\left(\theta'_o - \Delta, \varphi'_o - \sigma\right)$、 $\left(\theta'_o - \Delta, \varphi'_o + \sigma\right)$、 $\left(\theta'_o + \Delta, \varphi'_o - \sigma\right)$、 $\left(\theta'_o + \Delta, \varphi'_o + \sigma\right)$ of the rectangular restricted by $A_{ori}\left(\theta'_o, \varphi'_o, \Delta, \sigma\right)$ their corresponding location on the sphere whose radius is R can be calculated by:

$$R \cdot \left( \sin\left(\theta'_o - \Delta\right)\cos\left(\varphi'_o - \sigma\right), \sin\left(\varphi'_o - \sigma\right), \cos\left(\theta'_o - \Delta\right)\cos\left(\varphi'_o - \sigma\right) \right) \qquad 、$$

$$R \cdot \left( \sin\left(\theta'_o - \Delta\right)\cos\left(\varphi'_o + \sigma\right), \sin\left(\varphi'_o + \sigma\right), \cos\left(\theta'_o - \Delta\right)\cos\left(\varphi'_o + \sigma\right) \right) \qquad 、$$

$$R \cdot \left( \sin\left(\theta'_o + \Delta\right)\cos\left(\varphi'_o - \sigma\right), \sin\left(\varphi'_o - \sigma\right), \cos\left(\theta'_o + \Delta\right)\cos\left(\varphi'_o - \sigma\right)\right) \qquad \text{、}$$

$$R \cdot \left( \sin\left(\theta'_o + \Delta\right)\cos\left(\varphi'_o + \sigma\right), \sin\left(\varphi'_o + \sigma\right), \cos\left(\theta'_o + \Delta\right)\cos\left(\varphi'_o + \sigma\right)\right) ;$$

Area surrounded by those four points $S\left(A_{ori}\left(\theta'_o, \varphi'_o, \Delta, \sigma\right)\right)$ is:

$$S\left(A_{ori}\left(\theta'_o, \varphi'_o, \Delta, \sigma\right)\right) \approx \vartheta(\Delta, \sigma) \cdot R^2 \cdot \cos\left(\varphi'_o\right)$$

where, $\vartheta(\Delta,\sigma)$ is function of $\Delta$, $\sigma$, when $\Delta$ and $\sigma$ are constant, $\vartheta(\Delta,\sigma)$ is also a constant as $2\sqrt{2} \cdot \sqrt{1 - \cos\left(2\Delta\right)} \cdot \cos\left(\sigma\right) \cdot \sin\left(\Delta\right)$;

(3) In the reference space, the ratio of current processing unit $A_{ori}\left(\theta'_o, \varphi'_o, \Delta, \sigma\right)$ corresponding to $(\theta_o, \varphi_o)$ in the observation space $W_{rep}$:

$$E_{ori}\left(A_{ori}\left(\theta'_o, \varphi'_o, \Delta, \sigma\right)\right) = S\left(A_{ori}\left(\theta'_o, \varphi'_o, \Delta, \sigma\right)\right) / \left(4\pi R^2\right) \approx \vartheta(\Delta, \sigma) \cdot \cos\left(\varphi'_o\right) / \left(4\pi\right)$$

,

where $E_{ori}\left(A_{ori}\left(\theta'_o, \varphi'_o, \Delta, \sigma\right)\right)$ is relate to the location of $S\left(A_{ori}\left(\theta'_o, \varphi'_o, \Delta, \sigma\right)\right)$ in the observation space $W_{rep}$, which is not constant;

(4) The quality Q of $\left(\theta'_t, \varphi'_t\right)$ in the new space to be evaluated $W'_t$, which is corresponding to $\left(\theta'_o, \varphi'_o\right)$ in the new reference space $W'_{rep}$: $Q\left(\theta'_t, \varphi'_t\right) = c \cdot E_{ori}\left(A_{ori}\left(\theta'_o, \varphi'_o, \Delta, \sigma\right)\right) \cdot \left| p_t\left(\theta'_t, \varphi'_t\right) - p_o\left(\theta'_o, \varphi'_o\right)\right|$ ,

where c is constant (can be set as 1). $p_t\left(\theta'_t, \varphi'_t\right)$ represents the value of pixel at $\left(\theta'_t, \varphi'_t\right)$ in the new space to be evaluated, $p_o\left(\theta'_o, \varphi'_o\right)$ represents the value of pixel at $\left(\theta'_o, \varphi'_o\right)$ in the new reference space;

(5) The quality of the entire image is presented as

$$Quality = \sum_{\left(\theta'_t, \varphi'_t\right) \in W'_t} Q\left(\theta'_t, \varphi'_t\right)$$

**Embodiment 2**

The second embodiment of the patent relates to a digital image quality evaluation method. Several basic definitions need to be made. The observation space $W_o$ to present observing digital images is a sphere. The representation space of digital images to be evaluated $W_t$ is equi rectangular projection (ERP) format. The representation space of reference digital images $W_{rep}$ is ERP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-

sampling and down-sampling can be operated if it is necessary, after which reference space $W_{rep}$ is converted to new reference space $W'_{rep}$ to present images and space to be evaluated $W_t$ is converted to new space to be evaluated $W'_t$;

(2) One pixel $(\theta_t, \varphi_t)$ in the space to be evaluated $W_t$ is corresponding to $\left( \theta'_t, \varphi'_t \right)$ in the new reference space $W'_t$, the corresponding processing unit $A_{proc}\left( \theta'_t, \varphi'_t, \Delta, \sigma \right)$ is presented as:

$$A_{proc}\left( \theta'_t, \varphi'_t, \Delta, \sigma \right) = \left\{ \left| \theta - \theta'_t \right| \leq \Delta, \left| \varphi - \varphi'_t \right| \leq \sigma \right\}$$

Where, $\Delta$ and $\sigma$ are constant, $\Delta$ is defined as half of unit length of $\theta$ axis of new reference space $W'_t$, $\sigma$ is defined as half of unit length of $\varphi$ axis of new reference space $W'_t$. For four peak $\left( \theta'_t\text{-}\Delta, \varphi'_t\text{-}\sigma \right)$、 $\left( \theta'_t\text{-}\Delta, \varphi'_t\text{+}\sigma \right)$、 $\left( \theta'_t\text{+}\Delta, \varphi'_t\text{-}\sigma \right)$、 $\left( \theta'_t\text{+}\Delta, \varphi'_t\text{+}\sigma \right)$ of the rectangular restricted by $A_{proc}\left( \theta'_t, \varphi'_t, \Delta, \sigma \right)$ their corresponding location on the sphere whose radius is R can be calculated by:

$$R \cdot \left( \sin\left( \theta'_t\text{-}\Delta \right)\cos\left( \varphi'_t\text{-}\sigma \right), \sin\left( \varphi'_t\text{-}\sigma \right), \cos\left( \theta'_t\text{-}\Delta \right)\cos\left( \varphi'_t\text{-}\sigma \right) \right) \text{、}$$

$$R \cdot \left( \sin\left( \theta'_t\text{-}\Delta \right)\cos\left( \varphi'_t\text{+}\sigma \right), \sin\left( \varphi'_t\text{+}\sigma \right), \cos\left( \theta'_t\text{-}\Delta \right)\cos\left( \varphi'_t\text{+}\sigma \right) \right) \text{、}$$

$$R \cdot \left( \sin\left( \theta'_t\text{+}\Delta \right)\cos\left( \varphi'_t\text{-}\sigma \right), \sin\left( \varphi'_t\text{-}\sigma \right), \cos\left( \theta'_t\text{+}\Delta \right)\cos\left( \varphi'_t\text{-}\sigma \right) \right) \text{、}$$

$$R \cdot \left( \sin\left( \theta'_t\text{+}\Delta \right)\cos\left( \varphi'_t\text{+}\sigma \right), \sin\left( \varphi'_t\text{+}\sigma \right), \cos\left( \theta'_t\text{+}\Delta \right)\cos\left( \varphi'_t\text{+}\sigma \right) \right);$$

Area surrounded by those four points $S\left( A_{proc}\left( \theta'_t, \varphi'_t, \Delta, \sigma \right) \right)$ is:

$$S\left( A_{proc}\left( \theta'_t, \varphi'_t, \Delta, \sigma \right) \right) \approx \vartheta(\Delta, \sigma) \cdot R^2 \cdot \cos\left( \varphi'_t \right)$$

where, $\vartheta(\Delta, \sigma)$ is function of $\Delta$, $\sigma$, when $\Delta$ and $\sigma$ are constant, $\vartheta(\Delta, \sigma)$ is also a constant as $2\sqrt{2} \cdot \sqrt{1-\cos\left( 2\Delta \right)} \cdot \cos(\sigma) \cdot \sin(\Delta)$;

(3) In the space to be evaluated, the ratio of current processing unit $A_{proc}\left( \theta'_t, \varphi'_t, \Delta, \sigma \right)$ corresponding to $(\theta_t, \varphi_t)$ in the observation space $W_{rep}$:

$$E_{proc}\left( A_{proc}\left( \theta'_t, \varphi'_t, \Delta, \sigma \right) \right) = S\left( A_{proc}\left( \theta'_t, \varphi'_t, \Delta, \sigma \right) \right) / \left( 4\pi R^2 \right) \approx \vartheta(\Delta, \sigma) \cdot \cos\left( \varphi'_t \right) / \left( 4\pi \right),$$

where $E_{proc}\left( A_{proc}\left( \theta'_t, \varphi'_t, \Delta, \sigma \right) \right)$ is relate to the location of $S\left( A_{proc}\left( \theta'_t, \varphi'_t, \Delta, \sigma \right) \right)$ in the observation space $W_{rep}$, which is not constant;

(4) The quality Q of $\left(\theta'_o,\varphi'_o\right)$ in the new reference space $W'_o$ , which is corresponding to $\left(\theta'_t,\varphi'_t\right)$ in the new space to be evaluated $W'_t$ :

$$Q\left(\theta'_t,\varphi'_t\right)=c\cdot E_{proc}\left(A_{proc}\left(\theta'_t,\varphi'_t,\Delta,\sigma\right)\right)\cdot\left|p_t\left(\theta'_t,\varphi'_t\right)-p_o\left(\theta'_o,\varphi'_o\right)\right|$$ , where c is constant(can be set as 1). $p_t\left(\theta'_t,\varphi'_t\right)$ represents the value of pixel at $\left(\theta'_t,\varphi'_t\right)$ in the new space to be evaluated, $p_o\left(\theta'_o,\varphi'_o\right)$

represents the value of pixel at $\left(\theta'_o,\varphi'_o\right)$ in the new reference space;

(5) The quality of the entire image is presented as

$$Quality=\sum_{\left(\theta'_t,\varphi'_t\right)\in W''_t} Q\left(\theta'_t,\varphi'_t\right)$$

**Embodiment 3**

The third embodiment of the patent relates to a digital image quality evaluation method. Several basic definitions need to be made. The observation space $W_o$ to present observing digital images is a sphere. The representation space of digital images to be evaluated $W_t$ is equi rectangular projection (ERP) format. The representation space of reference digital images $W_{rep}$ is ERP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W''_{rep}$ to present images and space to be evaluated $W_t$ is converted to new space to be evaluated $W''_t$;

(2) One pixel $(\theta_o,\varphi_o)$ in reference space $W_{rep}$ is corresponding to $\left(\theta'_o,\varphi'_o\right)$ in the new reference space $W''_{rep}$, the corresponding processing unit $A_{ori}\left(\theta'_o,\varphi'_o,\Delta,\sigma\right)$ is presented as:

$$A_{ori}\left(\theta'_o,\varphi'_o,\Delta,\sigma\right)=\left\{\left|\theta-\theta'_o\right|\le\Delta,\left|\varphi-\varphi'_o\right|\le\sigma\right\}$$

Where, $\Delta$ and $\sigma$ are constant, $\Delta$ is defined as half of unit length of $\theta$ axis of new reference space $W''_{rep}$, $\sigma$ is defined as half of unit length of $\varphi$ axis of new reference space $W''_{rep}$. For four peak $\left(\theta'_o\text{-}\Delta,\varphi'_o\text{-}\sigma\right)$、$\left(\theta'_o\text{-}\Delta,\varphi'_o+\sigma\right)$、$\left(\theta'_o+\Delta,\varphi'_o-\sigma\right)$、$\left(\theta'_o+\Delta,\varphi'_o+\sigma\right)$ of the rectangular restricted by $A_{ori}\left(\theta'_o,\varphi'_o,\Delta,\sigma\right)$ their corresponding location on the sphere whose radius is R can be calculated by:

$$R\cdot\left(\sin\left(\theta'_o\text{-}\Delta\right)\cos\left(\varphi'_o\text{-}\sigma\right),\sin\left(\varphi'_o\text{-}\sigma\right),\cos\left(\theta'_o\text{-}\Delta\right)\cos\left(\varphi'_o\text{-}\sigma\right)\right)$$ 、

$$R\cdot\left(\sin\left(\theta'_o\text{-}\Delta\right)\cos\left(\varphi'_o+\sigma\right),\sin\left(\varphi'_o+\sigma\right),\cos\left(\theta'_o\text{-}\Delta\right)\cos\left(\varphi'_o+\sigma\right)\right)$$ 、

$$R \cdot \left( \sin\left(\theta_o' + \Delta\right)\cos\left(\varphi_o' - \sigma\right), \sin\left(\varphi_o' - \sigma\right), \cos\left(\theta_o' + \Delta\right)\cos\left(\varphi_o' - \sigma\right)\right)$$

$$R \cdot \left( \sin\left(\theta_o' + \Delta\right)\cos\left(\varphi_o' + \sigma\right), \sin\left(\varphi_o' + \sigma\right), \cos\left(\theta_o' + \Delta\right)\cos\left(\varphi_o' + \sigma\right)\right);$$

Area surrounded by those four points $S\left(A_{ori}\left(\theta_o', \varphi_o', \Delta, \sigma\right)\right)$ is:

$$S\left(A_{ori}\left(\theta_o', \varphi_o', \Delta, \sigma\right)\right) \approx \vartheta\left(\Delta, \sigma\right) \cdot R^2 \cdot \cos\left(\varphi_o'\right)$$

where, $\vartheta(\Delta, \sigma)$ is function of $\Delta$, $\sigma$, when $\Delta$ and $\sigma$ are constant, $\vartheta(\Delta, \sigma)$ is also a constant as

$$2\sqrt{2} \cdot \sqrt{1 - \cos\left(2\Delta\right)} \cdot \cos\left(\sigma\right) \cdot \sin\left(\Delta\right);$$

(3) In the reference space, the ratio of current processing unit $A_{ori}\left(\theta_o', \varphi_o', \Delta, \sigma\right)$ corresponding to $(\theta_o, \varphi_o)$ in the observation space $W_o$ :

$$E_{ori}\left(A_{ori}\left(\theta_o', \varphi_o', \Delta, \sigma\right)\right) = S\left(A_{ori}\left(\theta_o', \varphi_o', \Delta, \sigma\right)\right) / \left(4\pi R^2\right) \approx \vartheta\left(\Delta, \sigma\right) \cdot \cos\left(\varphi_o'\right) / \left(4\pi\right)$$

,

where $E_{ori}\left(A_{ori}\left(\theta_o', \varphi_o', \Delta, \sigma\right)\right)$ is relate to the location of $S\left(A_{ori}\left(\theta_o', \varphi_o', \Delta, \sigma\right)\right)$ in the observation space $W_o$, which is not constant;

(4) The quality Q of $\left(\theta_t', \varphi_t'\right)$ in the new space to be evaluated $W_t'$, which is corresponding to $\left(\theta_o', \varphi_o'\right)$ in the new reference space $W_{rep}'$ : $Q\left(\theta_t', \varphi_t'\right) = c \cdot E_{ori}\left(A_{ori}\left(\theta_o', \varphi_o', \Delta, \sigma\right)\right) \cdot \left| p_t\left(\theta_t', \varphi_t'\right) - p_o\left(\theta_o', \varphi_o'\right)\right|$ ,

where c is constant (can be set as 1). $p_t\left(\theta_t', \varphi_t'\right)$ represents the value of pixel at $\left(\theta_t', \varphi_t'\right)$ in the new space to be evaluated, $p_o\left(\theta_o', \varphi_o'\right)$ represents the value of pixel at $\left(\theta_o', \varphi_o'\right)$ in the new reference space;

(5) The quality of the entire image is presented as

$$Quality = \sum_{\left(\theta_t', \varphi_t'\right) \in W_t'} Q\left(\theta_t', \varphi_t'\right)$$

## Embodiment 4

The fourth embodiment of the patent relates to a digital image quality evaluation method. Several basic definitions need to be made. The observation space $W_o$ to present observing digital images is a sphere. The representation space of digital images to be evaluated $W_t$ is equi rectangular projection (ERP) format. The representation space of reference digital images $W_{rep}$ is ERP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W_{rep}'$ to present images and space to be evaluated $W_t$ is converted to new space to be evaluated $W_t'$;

(2) One pixel ($\theta_t, \varphi_t$) in the space to be evaluated $W_t$ is corresponding to $\left(\theta_t', \varphi_t'\right)$ in the new reference space $W_t'$, the corresponding processing unit $A_{proc}\left(\theta_t', \varphi_t', \Delta, \sigma\right)$ is presented as:

$$A_{proc}\left(\theta_t', \varphi_t', \Delta, \sigma\right) = \left\{\left|\theta - \theta_t'\right| \leq \Delta, \left|\varphi - \varphi_t'\right| \leq \sigma\right\}$$

Where, $\Delta$ and $\sigma$ are constant, $\Delta$ is defined as half of unit length of $\theta$ axis of new reference space $W_t'$, $\sigma$ is defined as half of unit length of $\varphi$ axis of new reference space $W_t'$. For four peak $\left(\theta_t'-\Delta, \varphi_t'-\sigma\right)$、 $\left(\theta_t'-\Delta, \varphi_t'+\sigma\right)$、 $\left(\theta_t'+\Delta, \varphi_t'-\sigma\right)$、 $\left(\theta_t'+\Delta, \varphi_t'+\sigma\right)$ of the rectangular restricted by $A_{proc}\left(\theta_t', \varphi_t', \Delta, \sigma\right)$ their corresponding location on the sphere whose radius is R can be calculated by:

$$R \cdot \left(\sin\left(\theta_t'-\Delta\right)\cos\left(\varphi_t'-\sigma\right), \sin\left(\varphi_t'-\sigma\right), \cos\left(\theta_t'-\Delta\right)\cos\left(\varphi_t'-\sigma\right)\right) \qquad 、$$

$$R \cdot \left(\sin\left(\theta_t'-\Delta\right)\cos\left(\varphi_t'+\sigma\right), \sin\left(\varphi_t'+\sigma\right), \cos\left(\theta_t'-\Delta\right)\cos\left(\varphi_t'+\sigma\right)\right) \qquad 、$$

$$R \cdot \left(\sin\left(\theta_t'+\Delta\right)\cos\left(\varphi_t'-\sigma\right), \sin\left(\varphi_t'-\sigma\right), \cos\left(\theta_t'+\Delta\right)\cos\left(\varphi_t'-\sigma\right)\right) \qquad 、$$

$$R \cdot \left(\sin\left(\theta_t'+\Delta\right)\cos\left(\varphi_t'+\sigma\right), \sin\left(\varphi_t'+\sigma\right), \cos\left(\theta_t'+\Delta\right)\cos\left(\varphi_t'+\sigma\right)\right);$$

Area surrounded by those four points $S\left(A_{proc}\left(\theta_t', \varphi_t', \Delta, \sigma\right)\right)$ is:

$$S\left(A_{proc}\left(\theta_t', \varphi_t', \Delta, \sigma\right)\right) \approx \vartheta\left(\Delta, \sigma\right) \cdot R^2 \cdot \cos\left(\varphi_t'\right)$$

where, $\vartheta(\Delta,\sigma)$ is function of $\Delta$, $\sigma$, when $\Delta$ and $\sigma$ are constant, $\vartheta(\Delta,\sigma)$ is also a constant as $2\sqrt{2} \cdot \sqrt{1-\cos\left(2\Delta\right)} \cdot \cos\left(\sigma\right) \cdot \sin\left(\Delta\right)$;

(3) In the space to be evaluated, the ratio of current processing unit $A_{proc}\left(\theta_t', \varphi_t', \Delta, \sigma\right)$ corresponding to ($\theta_t$, $\varphi_t$) in the observation space $W_o$ :

$$E_{proc}\left(A_{proc}\left(\theta_t', \varphi_t', \Delta, \sigma\right)\right) = S\left(A_{proc}\left(\theta_t', \varphi_t', \Delta, \sigma\right)\right)/\left(4\pi R^2\right) \approx \vartheta\left(\Delta, \sigma\right) \cdot \cos\left(\varphi_t'\right)/\left(4\pi\right),$$

where $E_{proc}\left(A_{proc}\left(\theta_t', \varphi_t', \Delta, \sigma\right)\right)$ is relate to the location of $S\left(A_{proc}\left(\theta_t', \varphi_t', \Delta, \sigma\right)\right)$ in the observation space $W_o$, which is not constant;

(4) The quality Q of $\left(\theta_o', \varphi_o'\right)$ in the new reference space $W_o'$, which is corresponding to $\left(\theta_t', \varphi_t'\right)$ in the new space to be evaluated $W_t'$ :

$$Q\left(\theta_t', \varphi_t'\right) = c \cdot E_{proc}\left(A_{proc}\left(\theta_t', \varphi_t', \Delta, \sigma\right)\right) \cdot \left|p_t\left(\theta_t', \varphi_t'\right) - p_o\left(\theta_o', \varphi_o'\right)\right| ,$$ where c is constant (can be set as 1). $p_t\left(\theta_t', \varphi_t'\right)$ represents the value of pixel at $\left(\theta_t', \varphi_t'\right)$ in the new space to be evaluated, $p_o\left(\theta_o', \varphi_o'\right)$ represents the value of pixel at $\left(\theta_o', \varphi_o'\right)$ in the new reference space;

(5) The quality of the entire image is presented as

$$Quality = \sum_{\left(\theta_t', \varphi_t'\right) \in W_t'} Q\left(\theta_t', \varphi_t'\right)$$

**Embodiment 5**

The fifth embodiment of the patent relates to a digital image quality evaluation method. Several basic definitions need to be made. The observation space $W_o$ to present observing digital images is a sphere. The representation space of digital images to be evaluated $W_t$ is equi rectangular projection (ERP) format. The representation space of reference digital images $W_{rep}$ is ERP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W_{rep}'$ to present images and space to be evaluated $W_t$ is converted to new space to be evaluated $W_t'$ ;

(2) One pixel $(\theta_o, \varphi_o)$ in reference space $W_{rep}$ is corresponding to $\left(\theta_o', \varphi_o'\right)$ in the new reference space $W_{rep}'$, the corresponding processing unit $A_{ori}\left(\theta_o', \varphi_o', \Delta, \sigma\right)$ is presented as the region of three nearest pixels of pixel $(\theta_o, \varphi_o)$ ; Mapping this region onto the spherical observation space whose radius is R, the area covered on sphere is $S\left(A_{ori}\left(\theta_o', \varphi_o', \Delta, \sigma\right)\right)$.

In the reference space, the ratio of current processing unit $A_{ori}\left(\theta_o', \varphi_o', \Delta, \sigma\right)$ corresponding to $(\theta_o, \varphi_o)$ in the observation space $W_o$ :

$$E_{ori}\left(A_{ori}\left(\theta_o', \varphi_o', \Delta, \sigma\right)\right) = S\left(A_{ori}\left(\theta_o', \varphi_o', \Delta, \sigma\right)\right) / \left(4\pi R^2\right) \approx \vartheta(\Delta, \sigma) \cdot \cos\left(\varphi_o'\right) / \left(4\pi\right)$$

where $E_{ori}\left(A_{ori}\left(\theta_o', \varphi_o', \Delta, \sigma\right)\right)$ is relate to the location of $S\left(A_{ori}\left(\theta_o', \varphi_o', \Delta, \sigma\right)\right)$ in the observation space $W_o$, which is not constant;

(3) The quality Q of $\left(\theta_t', \varphi_t'\right)$ in the new space to be evaluated $W_t'$ , which is corresponding to $\left(\theta_o', \varphi_o'\right)$ in the new reference space $W_{rep}'$ :

$$Q\left(\theta_t', \varphi_t'\right) = c \cdot E_{ori}\left(A_{ori}\left(\theta_o', \varphi_o', \Delta, \sigma\right)\right) \cdot \left|p_t\left(\theta_t', \varphi_t'\right) - p_o\left(\theta_o', \varphi_o'\right)\right| ,$$ where c is constant (can be set as 1). $p_t\left(\theta_t', \varphi_t'\right)$ represents the value of pixel at $\left(\theta_t', \varphi_t'\right)$ in the new space to be evaluated, $p_o\left(\theta_o', \varphi_o'\right)$

represents the value of pixel at $\left(\theta'_o,\varphi'_o\right)$ in the new reference space;

(4) The quality of the entire image is presented as

$$Quality = \sum_{\left(\theta'_t,\varphi'_t\right)\in W'_t} Q\left(\theta'_t,\varphi'_t\right)$$

**Embodiment 6**

The sixth embodiment of the patent relates to a digital image quality evaluation method. Several basic definitions need to be made. The observation space $W_o$ to present observing digital images is a sphere. The representation space of digital images to be evaluated $W_t$ is equi rectangular projection (ERP) format. The representation space of reference digital images $W_{rep}$ is ERP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W'_{rep}$ to present images and space to be evaluated $W_t$ is converted to new space to be evaluated $W'_t$;

(2) One pixel $(\theta_o,\varphi_o)$ in reference space $W_{rep}$ is corresponding to $\left(\theta'_o,\varphi'_o\right)$ in the new reference space $W'_{rep}$, the corresponding processing unit $A_{ori}\left(\theta'_o,\varphi'_o,\Delta,\sigma\right)$ is presented as the region of four nearest pixels of pixel $(\theta_o, \varphi_o)$; Mapping this region onto the spherical observation space whose radius is R, the area covered on sphere is $S\left(A_{ori}\left(\theta'_o,\varphi'_o,\Delta,\sigma\right)\right)$.

In the reference space, the ratio of current processing unit $A_{ori}\left(\theta'_o,\varphi'_o,\Delta,\sigma\right)$ corresponding to $(\theta_o,\varphi_o)$ in the observation space $W_o$:

$$E_{ori}\left(A_{ori}\left(\theta'_o,\varphi'_o,\Delta,\sigma\right)\right)=S\left(A_{ori}\left(\theta'_o,\varphi'_o,\Delta,\sigma\right)\right)/\left(4\pi R^2\right)\approx\vartheta(\Delta,\sigma)\cdot\cos\left(\varphi'_o\right)/(4\pi)$$

,

where $E_{ori}\left(A_{ori}\left(\theta'_o,\varphi'_o,\Delta,\sigma\right)\right)$ is relate to the location of $S\left(A_{ori}\left(\theta'_o,\varphi'_o,\Delta,\sigma\right)\right)$ in the observation space $W_o$, which is not constant;

(3) The quality Q of $\left(\theta'_t,\varphi'_t\right)$ in the new space to be evaluated $W'_t$, which is corresponding to $\left(\theta'_o,\varphi'_o\right)$ in the new reference space $W'_{rep}$:

$$Q\left(\theta'_t,\varphi'_t\right)=c\cdot E_{ori}\left(A_{ori}\left(\theta'_o,\varphi'_o,\Delta,\sigma\right)\right)\cdot\left|p_t\left(\theta'_t,\varphi'_t\right)-p_o\left(\theta'_o,\varphi'_o\right)\right|$$ , where c is constant (can be set as 1). $p_t\left(\theta'_t,\varphi'_t\right)$ represents the value of pixel at $\left(\theta'_t,\varphi'_t\right)$ in the new space to be evaluated, $p_o\left(\theta'_o,\varphi'_o\right)$

represents the value of pixel at $\left(\theta'_o,\varphi'_o\right)$ in the new reference space;

(4) The quality of the entire image is presented as

$$Quality = \sum_{(\theta_t', \varphi_t') \in W_t''} Q(\theta_t', \varphi_t')$$

**Embodiment 7**

The seventh embodiment of the patent relates to a digital image quality evaluation method. Several basic definitions need to be made. The observation space $W_o$ to present observing digital images is a sphere. The representation space of digital images to be evaluated $W_t$ is equi rectangular projection (ERP) format. The representation space of reference digital images $W_{rep}$ is ERP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W_{rep}''$ to present images and space to be evaluated $W_t$ is converted to new space to be evaluated $W_t'$;

(2) One pixel $(\theta_o, \varphi_o)$ in reference space $W_{rep}$ is corresponding to $(\theta_o', \varphi_o')$ in the new reference space $W_{rep}''$, the corresponding processing unit $A_{ori}(\theta_o', \varphi_o', \Delta, \sigma)$ is presented as the surrounded region of three nearest pixels of pixel $(\theta_o, \varphi_o)$ and their center points; Mapping this region onto the spherical observation space whose radius is R, the area covered on sphere is $S(A_{ori}(\theta_o', \varphi_o', \Delta, \sigma))$.

In the reference space, the ratio of current processing unit $A_{ori}(\theta_o', \varphi_o', \Delta, \sigma)$ corresponding to $(\theta_o, \varphi_o)$ in the observation space $W_o$:

$$E_{ori}(A_{ori}(\theta_o', \varphi_o', \Delta, \sigma)) = S(A_{ori}(\theta_o', \varphi_o', \Delta, \sigma))/(4\pi R^2) \approx \vartheta(\Delta, \sigma) \cdot \cos(\varphi_o')/(4\pi)$$

,

where $E_{ori}(A_{ori}(\theta_o', \varphi_o', \Delta, \sigma))$ is relate to the location of $S(A_{ori}(\theta_o', \varphi_o', \Delta, \sigma))$ in the observation space $W_o$, which is not constant;

(3) The quality Q of $(\theta_t', \varphi_t')$ in the new space to be evaluated $W_t'$, which is corresponding to $(\theta_o', \varphi_o')$ in the new reference space $W_{rep}''$:

$$Q(\theta_t', \varphi_t') = c \cdot E_{ori}(A_{ori}(\theta_o', \varphi_o', \Delta, \sigma)) \cdot |p_t(\theta_t', \varphi_t') - p_o(\theta_o', \varphi_o')|$$ , where c is constant (can be set as 1). $p_t(\theta_t', \varphi_t')$ represents the value of pixel at $(\theta_t', \varphi_t')$ in the new space to be evaluated, $p_o(\theta_o', \varphi_o')$ represents the value of pixel at $(\theta_o', \varphi_o')$ in the new reference space;

(4) The quality of the entire image is presented as

$$Quality = \sum_{(\theta_t', \varphi_t') \in W_t''} Q(\theta_t', \varphi_t')$$

**Embodiment 8**

The eighth embodiment of the patent relates to a digital image quality evaluation method. Several basic definitions need to be made. The observation space $W_o$ to present observing digital images is a sphere. The representation space of digital images to be evaluated $W_t$ is equi rectangular projection (ERP) format. The representation space of reference digital images $W_{rep}$ is ERP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W_{rep}''$ to present images and space to be evaluated $W_t$ is converted to new space to be evaluated $W_t''$;

(2) One pixel $(\theta_o, \varphi_o)$ in reference space $W_{rep}$ is corresponding to $\left(\theta_o', \varphi_o'\right)$ in the new reference space $W_{rep}''$, the corresponding processing unit $A_{ori}\left(\theta_o', \varphi_o', \Delta, \sigma\right)$ is presented as the surrounded region of four nearest pixels of pixel $(\theta_o, \varphi_o)$ and their center points; Mapping this region onto the spherical observation space whose radius is R, the area covered on sphere is $S\left(A_{ori}\left(\theta_o', \varphi_o', \Delta, \sigma\right)\right)$.

In the reference space, the ratio of current processing unit $A_{ori}\left(\theta_o', \varphi_o', \Delta, \sigma\right)$ corresponding to $(\theta_o, \varphi_o)$ in the observation space $W_o$ :

$$E_{ori}\left(A_{ori}\left(\theta_o', \varphi_o', \Delta, \sigma\right)\right) = S\left(A_{ori}\left(\theta_o', \varphi_o', \Delta, \sigma\right)\right)/\left(4\pi R^2\right) \approx \vartheta(\Delta, \sigma)\cdot\cos\left(\varphi_o'\right)/\left(4\pi\right)$$

,

where $E_{ori}\left(A_{ori}\left(\theta_o', \varphi_o', \Delta, \sigma\right)\right)$ is relate to the location of $S\left(A_{ori}\left(\theta_o', \varphi_o', \Delta, \sigma\right)\right)$ in the observation space $W_o$, which is not constant;

(3) The quality Q of $\left(\theta_t', \varphi_t'\right)$ in the new space to be evaluated $W_t''$, which is corresponding to $\left(\theta_o', \varphi_o'\right)$ in the new reference space $W_{rep}''$:

$$Q\left(\theta_t', \varphi_t'\right) = c \cdot E_{ori}\left(A_{ori}\left(\theta_o', \varphi_o', \Delta, \sigma\right)\right)\cdot\left|p_t\left(\theta_t', \varphi_t'\right) - p_o\left(\theta_o', \varphi_o'\right)\right|$$ , where c is constant (can be set as 1). $p_t\left(\theta_t', \varphi_t'\right)$ represents the value of pixel at $\left(\theta_t', \varphi_t'\right)$ in the new space to be evaluated, $p_o\left(\theta_o', \varphi_o'\right)$ represents the value of pixel at $\left(\theta_o', \varphi_o'\right)$ in the new reference space;

(4) The quality of the entire image is presented as

$$Quality = \sum_{\left(\theta_t', \varphi_t'\right) \in W_t''} Q\left(\theta_t', \varphi_t'\right)$$

**Embodiment 9**

The ninth embodiment of the patent relates to a digital image quality evaluation method. Several basic definitions need to be made. The observation space $W_o$ to present observing digital images is a sphere. The representation space of digital images to be evaluated $W_t$ is equi rectangular projection (ERP) format. The representation space of reference digital images $W_{rep}$ is ERP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W'_{rep}$ to present images and space to be evaluated $W_t$ is converted to new space to be evaluated $W'_t$;

(2) One pixel $(\theta_t, \varphi_t)$ in the space to be evaluated $W_t$ is corresponding to $\left( \theta'_t, \varphi'_t \right)$ in the new reference space $W'_t$, the corresponding processing unit $A_{proc}\left( \theta'_t, \varphi'_t, \Delta, \sigma \right)$ is presented as the region of three nearest pixels of pixel $(\theta_t, \varphi_t)$; Mapping this region onto the spherical observation space whose radius is R, the area covered on sphere is

$$S\left( A_{proc}\left( \theta'_t, \varphi'_t \right) \right).$$

(3) In the space to be evaluated, the ratio of current processing unit $A_{proc}\left( \theta'_t, \varphi'_t, \Delta, \sigma \right)$ corresponding to $(\theta_t, \varphi_t)$ in the observation space $W_o$:

$$E_{proc}\left( A_{proc}\left( \theta'_t, \varphi'_t, \Delta, \sigma \right) \right) = S\left( A_{proc}\left( \theta'_t, \varphi'_t, \Delta, \sigma \right) \right) / \left( 4\pi R^2 \right) \approx \vartheta\left( \Delta, \sigma \right) \cdot \cos\left( \varphi'_t \right) / \left( 4\pi \right) ,$$

where $E_{proc}\left( A_{proc}\left( \theta'_t, \varphi'_t, \Delta, \sigma \right) \right)$ is relate to the location of $S\left( A_{proc}\left( \theta'_t, \varphi'_t, \Delta, \sigma \right) \right)$ in the observation space $W_o$, which is not constant;

(4) The quality Q of $\left( \theta'_o, \varphi'_o \right)$ in the new reference space $W'_o$, which is corresponding to $\left( \theta'_t, \varphi'_t \right)$ in the new space to be evaluated $W'_t$:

$$Q\left( \theta'_t, \varphi'_t \right) = c \cdot E_{proc}\left( A_{proc}\left( \theta'_t, \varphi'_t, \Delta, \sigma \right) \right) \cdot \left| p_t\left( \theta'_t, \varphi'_t \right) - p_o\left( \theta'_o, \varphi'_o \right) \right| ,$$ where c is constant (can be set as 1). $p_t\left( \theta'_t, \varphi'_t \right)$ represents the value of pixel at $\left( \theta'_t, \varphi'_t \right)$ in the new space to be evaluated, $p_o\left( \theta'_o, \varphi'_o \right)$ represents the value of pixel at $\left( \theta'_o, \varphi'_o \right)$ in the new reference space;

(5) The quality of the entire image is presented as

$$Quality = \sum_{\left( \theta'_t, \varphi'_t \right) \in W'_t} Q\left( \theta'_t, \varphi'_t \right)$$

**Embodiment 10**

The tenth embodiment of the patent relates to a digital image quality evaluation method. Several basic definitions need to be made. The observation space $W_o$ to present observing digital images is a sphere. The representation space of digital images to be evaluated $W_t$ is equi rectangular projection (ERP) format. The representation space of reference digital images $W_{rep}$ is ERP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W'_{rep}$ to present images and space to be evaluated $W_t$ is converted to new space to be evaluated $W_t'$ ;

(2) One pixel $(\theta_t, \varphi_t)$ in the space to be evaluated $W_t$ is corresponding to $\left(\theta_t', \varphi_t'\right)$ in the new reference space $W_t'$ , the corresponding processing unit $A_{proc}\left(\theta_t', \varphi_t', \Delta, \sigma\right)$ is presented as the region of four nearest pixels of pixel $(\theta_t, \varphi_t)$; Mapping this region onto the spherical observation space whose radius is R, the area covered on sphere is

$$S\left(A_{proc}\left(\theta_t', \varphi_t'\right)\right).$$

(3) In the space to be evaluated, the ratio of current processing unit $A_{proc}\left(\theta_t', \varphi_t', \Delta, \sigma\right)$ corresponding to $(\theta_t, \varphi_t)$ in the observation space $W_o$ :

$$E_{proc}\left(A_{proc}\left(\theta_t', \varphi_t', \Delta, \sigma\right)\right) = S\left(A_{proc}\left(\theta_t', \varphi_t', \Delta, \sigma\right)\right)/\left(4\pi R^2\right) \approx \vartheta\left(\Delta, \sigma\right)\cdot\cos\left(\varphi_t'\right)/\left(4\pi\right) \quad ,$$

where $E_{proc}\left(A_{proc}\left(\theta_t', \varphi_t', \Delta, \sigma\right)\right)$ is relate to the location of $S\left(A_{proc}\left(\theta_t', \varphi_t', \Delta, \sigma\right)\right)$ in the observation space $W_o$, which is not constant;

(4) The quality Q of $\left(\theta_o', \varphi_o'\right)$ in the new reference space $W_o'$ , which is corresponding to $\left(\theta_t', \varphi_t'\right)$ in the new space to be evaluated $W_t'$ :

$$Q\left(\theta_t', \varphi_t'\right) = c\cdot E_{proc}\left(A_{proc}\left(\theta_t', \varphi_t', \Delta, \sigma\right)\right)\cdot\left|p_t\left(\theta_t', \varphi_t'\right) - p_o\left(\theta_o', \varphi_o'\right)\right| \quad,$$ where c is constant (can be set as 1). $p_t\left(\theta_t', \varphi_t'\right)$ represents the value of pixel at $\left(\theta_t', \varphi_t'\right)$ in the new space to be evaluated, $p_o\left(\theta_o', \varphi_o'\right)$ represents the value of pixel at $\left(\theta_o', \varphi_o'\right)$ in the new reference space;

(5) The quality of the entire image is presented as

$$Quality = \sum_{\left(\theta_t', \varphi_t'\right)\in W_t'} Q\left(\theta_t', \varphi_t'\right)$$

**Embodiment 11**

The eleventh embodiment of the patent relates to a digital image quality evaluation method. Several basic definitions need to be made. The observation space $W_o$ to present observing digital images is a sphere. The representation space of digital images to be evaluated $W_t$ is equi rectangular projection (ERP) format. The representation space of reference digital images $W_{rep}$ is ERP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W_{rep}'$ to present images and space to be evaluated $W_t$ is converted to new space to be evaluated $W_t'$ ;

(2) One pixel $(\theta_t, \varphi_t)$ in the space to be evaluated $W_t$ is corresponding to $\left(\theta_t', \varphi_t'\right)$ in the new reference space $W_t'$ , the corresponding processing unit $A_{proc}\left(\theta_t', \varphi_t', \Delta, \sigma\right)$ is presented as the region of three nearest pixels of pixel $(\theta_o, \varphi_o)$ and their center points; Mapping this region onto the spherical observation space whose radius is R, the area covered on sphere is $S\left(A_{proc}\left(\theta_t',\varphi_t'\right)\right)$.

(3) In the space to be evaluated, the ratio of current processing unit $A_{proc}\left(\theta_t',\varphi_t',\Delta,\sigma\right)$ corresponding to $(\theta_t, \varphi_t)$ in the observation space $W_o$ :

$$E_{proc}\left(A_{proc}\left(\theta_t',\varphi_t',\Delta,\sigma\right)\right)=S\left(A_{proc}\left(\theta_t',\varphi_t',\Delta,\sigma\right)\right)/\left(4\pi R^2\right)\approx \vartheta\left(\Delta,\sigma\right)\cdot\cos\left(\varphi_t'\right)/\left(4\pi\right),$$

where $E_{proc}\left(A_{proc}\left(\theta_t',\varphi_t',\Delta,\sigma\right)\right)$ is relate to the location of $S\left(A_{proc}\left(\theta_t',\varphi_t',\Delta,\sigma\right)\right)$ in the observation space $W_o$, which is not constant;

(4) The quality Q of $\left(\theta_o',\varphi_o'\right)$ in the new reference space $W_o'$ , which is corresponding to $\left(\theta_t',\varphi_t'\right)$ in the new space to be evaluated $W_t'$ :

$$Q\left(\theta_t',\varphi_t'\right)=c\cdot E_{proc}\left(A_{proc}\left(\theta_t',\varphi_t',\Delta,\sigma\right)\right)\cdot\left|p_t\left(\theta_t',\varphi_t'\right)-p_o\left(\theta_o',\varphi_o'\right)\right|$$ , where c is constant (can be set as 1). $p_t\left(\theta_t',\varphi_t'\right)$ represents the value of pixel at $\left(\theta_t',\varphi_t'\right)$ in the new space to be evaluated, $p_o\left(\theta_o',\varphi_o'\right)$ represents the value of pixel at $\left(\theta_o',\varphi_o'\right)$ in the new reference space;

(5) The quality of the entire image is presented as

$$Quality = \sum_{\left(\theta_t',\varphi_t'\right)\in W_t'} Q\left(\theta_t',\varphi_t'\right)$$

**Embodiment 12**

The twelfth embodiment of the patent relates to a digital image quality evaluation method. Several basic definitions need to be made. The observation space $W_o$ to present observing digital images is a sphere. The representation space of digital images to be evaluated $W_t$ is equi rectangular projection (ERP) format. The representation space of reference digital images $W_{rep}$ is ERP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W_{rep}'$ to present images and space to be evaluated $W_t$ is converted to new space to be evaluated $W_t'$ ;

(2) One pixel $(\theta_t,\varphi_t)$ in the space to be evaluated $W_t$ is corresponding to $\left(\theta_t',\varphi_t'\right)$ in the new reference space $W_t'$ , the corresponding processing unit $A_{proc}\left(\theta_t',\varphi_t',\Delta,\sigma\right)$ is presented as the region of four nearest pixels of pixel $(\theta_o,\varphi_o)$ and their center points; Mapping this region onto the spherical observation space whose radius is R, the area covered on sphere is $S\left(A_{proc}\left(\theta_t',\varphi_t'\right)\right)$.

(3) In the space to be evaluated, the ratio of current processing unit $A_{proc}\left(\theta_t',\varphi_t',\Delta,\sigma\right)$ corresponding to $(\theta_t,\varphi_t)$ in the observation space $W_o$ :

$$E_{proc}\left(A_{proc}\left(\theta_t',\varphi_t',\Delta,\sigma\right)\right)=S\left(A_{proc}\left(\theta_t',\varphi_t',\Delta,\sigma\right)\right)/\left(4\pi R^2\right)\approx\vartheta\left(\Delta,\sigma\right)\cdot\cos\left(\varphi_t'\right)/\left(4\pi\right) \quad,$$

where $E_{proc}\left(A_{proc}\left(\theta_t',\varphi_t',\Delta,\sigma\right)\right)$ is relate to the location of $S\left(A_{proc}\left(\theta_t',\varphi_t',\Delta,\sigma\right)\right)$ in the observation space $W_o$, which is not constant;

(4) The quality Q of $\left(\theta_o',\varphi_o'\right)$ in the new reference space $W_o'$ , which is corresponding to $\left(\theta_t',\varphi_t'\right)$ in the new space to be evaluated $W_t'$ :

$$Q\left(\theta_t',\varphi_t'\right)=c\cdot E_{proc}\left(A_{proc}\left(\theta_t',\varphi_t',\Delta,\sigma\right)\right)\cdot\left|p_t\left(\theta_t',\varphi_t'\right)-p_o\left(\theta_o',\varphi_o'\right)\right| \quad,$$ where c is constant (can be set as 1). $p_t\left(\theta_t',\varphi_t'\right)$ represents the value of pixel at $\left(\theta_t',\varphi_t'\right)$ in the new space to be evaluated, $p_o\left(\theta_o',\varphi_o'\right)$

represents the value of pixel at $\left(\theta_o',\varphi_o'\right)$ in the new reference space;

(5) The quality of the entire image is presented as

$$Quality=\sum_{\left(\theta_t',\varphi_t'\right)\in W_t'}Q\left(\theta_t',\varphi_t'\right)$$

## Embodiment 13

The thirteenth embodiment of the patent relates to a digital image quality evaluation method. Several basic definitions need to be made. The observation space $W_o$ to present observing digital images is a sphere. The representation space of digital images to be evaluated $W_t$ is cube map projection (CMP) format. The representation space of reference digital images $W_{rep}$ is CMP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to

new reference space $W_{rep}'$ to present images and space to be evaluated $W_t$ is converted to new space to be evaluated $W_t'$ ;

(2) One pixel $(x_o,y_o,z_o)$ in reference space $W_{rep}$ is corresponding to $\left(x_o',y_o',z_o'\right)$ in the new reference space

$W_{rep}'$ , without loss of generality, the z value in $\left(x_o',y_o',z_o'\right)$ is a constant. Assuming the corresponding processing unit $A_{ori}\left(x_o',y_o',z_o',\Delta,\sigma\right)$ is presented as:

$$A_{ori}\left(x_o',y_o',z_o',\Delta,\sigma\right)=\left\{\left|x-x_o'\right|\leq\Delta,\left|y-y_o'\right|\leq\sigma\right\}$$

Where, $\Delta$ and $\sigma$ are constant, $\Delta$ is defined as half of unit length of x axis of new reference space $W_{rep}'$ , $\sigma$ is defined

as half of unit length of y axis of new reference space $W_{rep}'$ . For four peak $\left(x_o'-\Delta,y_o'-\sigma,z_o'\right)$ 、

$\left(x_o'-\Delta,y_o'+\sigma,z_o'\right)$ 、  $\left(x_o'+\Delta,y_o'-\sigma,z_o'\right)$  、  $\left(x_o'+\Delta,y_o'+\sigma,z_o'\right)$ of the rectangular restricted by

$A_{ori}\left(x_o',y_o',z_o',\Delta,\sigma\right)$ , mapping those four mapped points onto sphere and corresponding mapped spherical area surrounded by four mapped points is $S\left(A_{ori}\left(x'_o, y'_o, z'_o, \Delta, \sigma\right)\right)$.

(3) In the reference space, the ratio of current processing unit $A_{ori}\left(x'_o, y'_o, z'_o, \Delta, \sigma\right)$ corresponding to $(x_o, y_o, z_o)$ in the observation space $W_o$ :

$$E_{ori}\left(A_{ori}\left(x'_o, y'_o, z'_o, \Delta, \sigma\right)\right) = (3 + \frac{x_o'^2 + y_o'^2 - (x'_o + y'_o) * a}{a^2 / 4})^{-3/2}$$

$E_{proc}\left(A_{proc}\left(x'_t, y'_t, z'_t, \Delta, \sigma\right)\right)$ is relate to the location of $S\left(A_{proc}\left(x'_t, y'_t, z'_t, \Delta, \sigma\right)\right)$ in the observation space $W_o$, which is not constant;

(4) The quality Q of $\left(x'_t, y'_t, z'_t\right)$ in the new space to be evaluated $W'_t$, which is corresponding to $\left(x'_o, y'_o, z'_o\right)$ in the new reference space $W'_{rep}$ :

$$Q\left(x'_t, y'_t, z'_t\right) = c \cdot E_{proc}\left(A_{proc}\left(x'_t, y'_t, z'_t, \Delta, \sigma\right)\right) \cdot \left|p_t\left(x'_t, y'_t, z'_t\right) - p_o\left(x'_o, y'_o, z'_o\right)\right| \quad,$$

where c is constant (can be set as 1). $p_t\left(x'_t, y'_t, z'_t\right)$ represents the value of pixel at $\left(x'_t, y'_t, z'_t\right)$ in the new space to be evaluated, $p_t\left(x'_o, y'_o, z'_o\right)$ represents the value of pixel at $\left(x'_o, y'_o, z'_o\right)$ in the new reference space;

(5) The quality of the entire image is presented as

$$Quality = \sum_{(x'_t, y'_t, z'_t)\in W'_t} Q\left(x'_t, y'_t, z'_t\right)$$

**Embodiment 14**

The fourteenth embodiment of the patent relates to a digital image quality evaluation method. Several basic definitions need to be made. The observation space $W_o$ to present observing digital images is a sphere. The representation space of digital images to be evaluated $W_t$ is cube map projection (CMP) format. The representation space of reference digital images $W_{rep}$ is CMP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W'_{rep}$ to present images and space to be evaluated $W_t$ is converted to new space to be evaluated $W'_t$;

(2) One pixel $(x_t, y_t, z_t)$ in the space to be evaluated $W_t$ is corresponding to $\left(x'_t, y'_t, z'_t\right)$ in the new space to be evaluated $W'_t$, without loss of generality, the z value in $\left(x'_t, y'_t, z'_t\right)$ is a constant. Assuming the corresponding processing unit $A_{proc}\left(x'_t, y'_t, z'_t, \Delta, \sigma\right)$ is presented as:

$$A_{proc}\left(x'_t, y'_t, z'_t, \Delta, \sigma\right) = \left\{\left|x - x'_t\right| \le \Delta, \left|y - y'_t\right| \le \sigma\right\}$$

Where, $\Delta$ and $\sigma$ are constant, $\Delta$ is defined as half of unit length of x axis of new space to be evaluated $W_t'$, $\sigma$ is defined as half of unit length of y axis of new space to be evaluated $W_t'$. For four peak $\left(x_o'-\Delta, y_o'-\sigma, z_o'\right)$, $\left(x_o'-\Delta, y_o'+\sigma, z_o'\right)$, $\left(x_o'+\Delta, y_o'-\sigma, z_o'\right)$, $\left(x_o'+\Delta, y_o'+\sigma, z_o'\right)$ of the rectangular restricted by $A_{proc}\left(x_t', y_t', z_t', \Delta, \sigma\right)$, mapping those four mapped points onto sphere and corresponding mapped spherical area surrounded by four mapped points is $S\left(A_{proc}\left(x_t', y_t', z_t', \Delta, \sigma\right)\right)$.

(3) In the space to be evaluated, the ratio of current processing unit $A_{proc}\left(x_t', y_t', z_t', \Delta, \sigma\right)$ corresponding to $(x_t, y_t, z_t)$ in the observation space $W_o$ :

$$E_{proc}\left(A_{proc}\left(x_t', y_t', z_t', \Delta, \sigma\right)\right) = (3 + \frac{x_t'^2 + y_t'^2 - (x_t' + y_t') * a}{a^2 / 4})^{-3/2}$$

$E_{proc}\left(A_{proc}\left(x_t', y_t', z_t', \Delta, \sigma\right)\right)$ is relate to the location of $S\left(A_{proc}\left(x_t', y_t', z_t', \Delta, \sigma\right)\right)$ in the observation space $W_o$, which is not constant;

(4) The quality Q of $\left(x_t', y_t', z_t'\right)$ in the new space to be evaluated $W_t'$, which is corresponding to $\left(x_o', y_o', z_o'\right)$ in the new reference space $W_{rep}'$ :

$$Q\left(x_t', y_t', z_t'\right) = c \cdot E_{proc}\left(A_{proc}\left(x_t', y_t', z_t', \Delta, \sigma\right)\right) \cdot \left|p_t\left(x_t', y_t', z_t'\right) - p_o\left(x_o', y_o', z_o'\right)\right| ,$$

where c is constant (can be set as 1). $p_t\left(x_t', y_t', z_t'\right)$ represents the value of pixel at $\left(x_t', y_t', z_t'\right)$ in the new space to be evaluated, $p_t\left(x_o', y_o', z_o'\right)$ represents the value of pixel at $\left(x_o', y_o', z_o'\right)$ in the new reference space;

(5) The quality of the entire image is presented as

$$Quality = \sum_{(x_t', y_t', z_t') \in W_t'} Q\left(x_t', y_t', z_t'\right)$$

**Embodiment 15**

The fifteenth embodiment of the patent relates to a digital image quality evaluation method. Several basic definitions need to be made. The observation space $W_o$ to present observing digital images is a sphere. The representation space of digital images to be evaluated $W_t$ is cube map projection (CMP) format. The representation space of reference digital images $W_{rep}$ is CMP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W_{rep}'$ to present images and space to be evaluated $W_t$ is converted to new space to be evaluated $W_t'$ ;

(2) One pixel $(x_o, y_o, z_o)$ in reference space $W_{rep}$ is corresponding to $\left(x'_o, y'_o, z'_o\right)$ in the new reference space $W''_{rep}$, without loss of generality, the z value in $\left(x'_o, y'_o, z'_o\right)$ is a constant. Assuming the corresponding processing unit $A_{ori}\left(x'_o, y'_o, z'_o, \Delta, \sigma\right)$ is presented as:

$$A_{ori}\left(x'_o, y'_o, z'_o, \Delta, \sigma\right) = \left\{\left|x - x'_o\right| \le \Delta, \left|y - y'_o\right| \le \sigma\right\}$$

Where, $\Delta$ and $\sigma$ are constant, $\Delta$ is defined as unit length of x axis of new reference space $W''_{rep}$, $\sigma$ is defined as unit length of y axis of new reference space $W''_{rep}$. For four peak $\left(x'_o\text{-}\Delta, y'_o\text{-}\sigma, z'_o\right)$、$\left(x'_o\text{-}\Delta, y'_o\text{+}\sigma, z'_o\right)$、$\left(x'_o\text{+}\Delta, y'_o\text{-}\sigma, z'_o\right)$、$\left(x'_o\text{+}\Delta, y'_o\text{+}\sigma, z'_o\right)$ of the rectangular restricted by $A_{ori}\left(x'_o, y'_o, z'_o, \Delta, \sigma\right)$, mapping those four mapped points onto sphere and corresponding mapped spherical area surrounded by four mapped points is $S\left(A_{ori}\left(x'_o, y'_o, z'_o, \Delta, \sigma\right)\right)$.

(3) In the reference space, the ratio of current processing unit $A_{ori}\left(x'_o, y'_o, z'_o, \Delta, \sigma\right)$ corresponding to $(x_o, y_o, z_o)$ in the observation space $W_o$ :

$$E_{ori}\left(A_{ori}\left(x'_o, y'_o, z'_o, \Delta, \sigma\right)\right) = (3 + \frac{x'^2_o + y'^2_o - (x'_o + y'_o) * a}{a^2 / 4})^{-3/2}$$

$E_{ori}\left(A_{ori}\left(x'_o, y'_o, z'_o, \Delta, \sigma\right)\right)$ is relate to the location of $S\left(A_{ori}\left(x'_o, y'_o, z'_o, \Delta, \sigma\right)\right)$ in the observation space $W_o$, which is not constant;

(4) The quality Q of $\left(x'_t, y'_t, z'_t\right)$ in the new space to be evaluated $W'_t$, which is corresponding to $\left(x'_o, y'_o, z'_o\right)$ in the new reference space $W''_{rep}$ :

$$Q\left(x'_t, y'_t, z'_t\right) = c \cdot E_{proc}\left(A_{proc}\left(x'_t, y'_t, z'_t, \Delta, \sigma\right)\right) \cdot \left|p_t\left(x'_t, y'_t, z'_t\right) - p_o\left(x'_o, y'_o, z'_o\right)\right| \quad,$$

where c is constant (can be set as 1). $p_t\left(x'_t, y'_t, z'_t\right)$ represents the value of pixel at $\left(x'_t, y'_t, z'_t\right)$ in the new space to be evaluated, $p_t\left(x'_o, y'_o, z'_o\right)$ represents the value of pixel at $\left(x'_o, y'_o, z'_o\right)$ in the new reference space;

(5) The quality of the entire image is presented as

$$Quality = \sum_{\left(x'_t, y'_t, z'_t\right) \in W'_t} Q\left(x'_t, y'_t, z'_t\right)$$

**Embodiment 16**

The sixteenth embodiment of the patent relates to a digital image quality evaluation method. Several basic definitions need to be made. The observation space $W_o$ to present observing digital images is a sphere. The representation space of digital images to be evaluated $W_t$ is cube map projection (CMP) format. The representation space of reference digital images $W_{rep}$ is CMP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W'_{rep}$ to present images and space to be evaluated $W_t$ is converted to new space to be evaluated $W'_t$;

(2) One pixel $(x_t, y_t, z_t)$ in the space to be evaluated $W_t$ is corresponding to $\left(x'_t, y'_t, z'_t\right)$ in the new space to be evaluated $W'_t$, without loss of generality, the z value in $\left(x'_t, y'_t, z'_t\right)$ is a constant. Assuming the corresponding processing unit $A_{proc}\left(x'_t, y'_t, z'_t, \Delta, \sigma\right)$ is presented as:

$$A_{proc}\left(x'_t, y'_t, z'_t, \Delta, \sigma\right) = \left\{ \left| x - x'_t \right| \leq \Delta, \left| y - y'_t \right| \leq \sigma \right\}$$

Where, $\Delta$ and $\sigma$ are constant, $\Delta$ is defined as unit length of x axis of new space to be evaluated $W'_t$, $\sigma$ is defined as unit length of y axis of new space to be evaluated $W'_t$. For four peak $\left(x'_o - \Delta, y'_o - \sigma, z'_o\right)$、 $\left(x'_o - \Delta, y'_o + \sigma, z'_o\right)$、 $\left(x'_o + \Delta, y'_o - \sigma, z'_o\right)$、 $\left(x'_o + \Delta, y'_o + \sigma, z'_o\right)$ of the rectangular restricted by $A_{proc}\left(x'_t, y'_t, z'_t, \Delta, \sigma\right)$, mapping those four mapped points onto sphere and corresponding mapped spherical area surrounded by four mapped points is $S\left(A_{proc}\left(x'_t, y'_t, z'_t, \Delta, \sigma\right)\right)$.

(3) In the space to be evaluated, the ratio of current processing unit $A_{proc}\left(x'_t, y'_t, z'_t, \Delta, \sigma\right)$ corresponding to $(x_t, y_t, z_t)$ in the observation space $W_o$:

$$E_{proc}\left(A_{proc}\left(x'_t, y'_t, z'_t, \Delta, \sigma\right)\right) = \left(3 + \frac{x'^2_t + y'^2_t - (x'_t + y'_t) * a}{a^2 / 4}\right)^{-3/2}$$

$E_{proc}\left(A_{proc}\left(x'_t, y'_t, z'_t, \Delta, \sigma\right)\right)$ is relate to the location of $S\left(A_{proc}\left(x'_t, y'_t, z'_t, \Delta, \sigma\right)\right)$ in the observation space $W_o$, which is not constant;

(4) The quality Q of $\left(x'_t, y'_t, z'_t\right)$ in the new space to be evaluated $W'_t$, which is corresponding to $\left(x'_o, y'_o, z'_o\right)$ in the new reference space $W'_{rep}$:

$$Q\left(x'_t, y'_t, z'_t\right) = c \cdot E_{proc}\left(A_{proc}\left(x'_t, y'_t, z'_t, \Delta, \sigma\right)\right) \cdot \left| p_t\left(x'_t, y'_t, z'_t\right) - p_o\left(x'_o, y'_o, z'_o\right) \right| ,$$

where c is constant (can be set as 1). $p_t\left(x'_t, y'_t, z'_t\right)$ represents the value of pixel at $\left(x'_t, y'_t, z'_t\right)$ in the new space to be evaluated, $p_t\left(x'_o, y'_o, z'_o\right)$ represents the value of pixel at $\left(x'_o, y'_o, z'_o\right)$ in the new reference space;

(5) The quality of the entire image is presented as

$$Quality = \sum_{(x_t', y_t', z_t') \in W_t'} Q(x_t', y_t', z_t')$$

**Embodiment 17**

The seventeenth embodiment of the patent relates to a digital image quality evaluation method. Several basic definitions need to be made. The observation space $W_o$ to present observing digital images is a sphere. The representation space of digital images to be evaluated $W_t$ is cube map projection (CMP) format. The representation space of reference digital images $W_{rep}$ is CMP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W_{rep}'$ to present images and space to be evaluated $W_t$ is converted to new space to be evaluated $W_t'$;

(2) One pixel $(x_o, y_o, z_o)$ in reference space $W_{rep}$ is corresponding to $\left(x_o', y_o', z_o'\right)$ in the new reference space $W_{rep}'$, without loss of generality, the z value in $\left(x_o', y_o', z_o'\right)$ is a constant. Assuming the corresponding processing unit $A_{ori}\left(x_o', y_o', z_o', \Delta, \sigma\right)$ is presented as the region of three nearest pixels of pixel $(x_o, y_o, z_o)$; Mapping this region onto the spherical observation space whose radius is R, the area covered on sphere is $S\left(A_{ori}\left(x_o', y_o', z_o', \Delta, \sigma\right)\right).$

(3) In the reference space, the ratio of current processing unit $A_{ori}\left(x_o', y_o', z_o'\right)$ corresponding to $(x_o, y_o, z_o)$ in the observation space $W_o$: $E_{ori}\left(A_{ori}\left(x_o', y_o', z_o'\right)\right)$ is relate to the location of $S\left(A_{ori}\left(x_o', y_o', z_o'\right)\right)$ in the observation space $W_o$, which is not a constant;

(4) The quality Q of $\left(x_t', y_t', z_t'\right)$ in the new space to be evaluated $W_t'$, which is corresponding to $\left(x_o', y_o', z_o'\right)$ in the new reference space $W_{rep}'$:

$$Q(x_t', y_t', z_t') = c \cdot E_{proc}\left(A_{proc}\left(x_t', y_t', z_t', \Delta, \sigma\right)\right) \cdot \left| p_t\left(x_t', y_t', z_t'\right) - p_o\left(x_o', y_o', z_o'\right) \right| \quad ,$$

where c is constant (can be set as 1). $p_t\left(x_t', y_t', z_t'\right)$ represents the value of pixel at $\left(x_t', y_t', z_t'\right)$ in the new space to be evaluated, $p_t\left(x_o', y_o', z_o'\right)$ represents the value of pixel at $\left(x_o', y_o', z_o'\right)$ in the new reference space;

(5) The quality of the entire image is presented as

$$Quality = \sum_{(x_t', y_t', z_t') \in W_t'} Q(x_t', y_t', z_t')$$

**Embodiment 18**

The eighteenth embodiment of the patent relates to a digital image quality evaluation method. Several basic definitions need to be made. The observation space $W_o$ to present observing digital images is a sphere. The representation space of digital images to be evaluated $W_t$ is cube map projection (CMP) format. The representation space of reference digital images $W_{rep}$ is CMP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W'_{rep}$ to present images and space to be evaluated $W_t$ is converted to new space to be evaluated $W''_t$;

(2) One pixel $(x_o, y_o, z_o)$ in reference space $W_{rep}$ is corresponding to $\left(x'_o, y'_o, z'_o\right)$ in the new reference space $W_{rep}$, without loss of generality, the z value in $\left(x'_o, y'_o, z'_o\right)$ is a constant. Assuming the corresponding processing unit $A_{ori}\left(x'_o, y'_o, z'_o, \Delta, \sigma\right)$ is presented as the region of four nearest pixels of pixel $\left(x_o, y_o, z_o\right)$; Mapping this region onto the spherical observation space whose radius is R, the area covered on sphere is $S\left(A_{ori}\left(x'_o, y'_o, z'_o, \Delta, \sigma\right)\right).$

(3) In the reference space, the ratio of current processing unit $A_{ori}\left(x'_o, y'_o, z'_o\right)$ corresponding to $(x_o, y_o, z_o)$ in the observation space $W_o$ : $E_{ori}\left(A_{ori}\left(x'_o, y'_o, z'_o\right)\right)$ is relate to the location of $S\left(A_{ori}\left(x'_o, y'_o, z'_o\right)\right)$ in the observation space $W_o$, which is not a constant;

(4) The quality Q of $\left(x'_t, y'_t, z'_t\right)$ in the new space to be evaluated $W''_t$, which is corresponding to $\left(x'_o, y'_o, z'_o\right)$ in the new reference space $W'_{rep}$ :

$$Q\left(x'_t, y'_t, z'_t\right) = c \cdot E_{proc}\left(A_{proc}\left(x'_t, y'_t, z'_t, \Delta, \sigma\right)\right) \cdot \left| p_t\left(x'_t, y'_t, z'_t\right) - p_o\left(x'_o, y'_o, z'_o\right)\right| \; ,$$

where c is constant (can be set as 1). $p_t\left(x'_t, y'_t, z'_t\right)$ represents the value of pixel at $\left(x'_t, y'_t, z'_t\right)$ in the new space to be evaluated, $p_t\left(x'_o, y'_o, z'_o\right)$ represents the value of pixel at $\left(x'_o, y'_o, z'_o\right)$ in the new reference space;

(5) The quality of the entire image is presented as

$$Quality = \sum_{\left(x'_t, y'_t, z'_t\right) \in W''_t} Q\left(x'_t, y'_t, z'_t\right)$$

**Embodiment 19**

The nineteenth embodiment of the patent relates to a digital image quality evaluation method. Several basic definitions need to be made. The observation space $W_o$ to present observing digital images is a sphere. The representation space of digital images to be evaluated $W_t$ is cube map projection (CMP) format. The representation space of reference digital images $W_{rep}$ is CMP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W''_{rep}$ to present images and space to be evaluated $W_t$ is converted to new space to be evaluated $W''_t$;

(2) One pixel $(x_o, y_o, z_o)$ in reference space $W_{rep}$ is corresponding to $\left(x'_o, y'_o, z'_o\right)$ in the new reference space $W''_{rep}$, without loss of generality, the z value in $\left(x'_o, y'_o, z'_o\right)$ is a constant. Assuming the corresponding processing unit $A_{ori}\left(x'_o, y'_o, z'_o, \Delta, \sigma\right)$ is presented as the region of three nearest pixels of pixel $(x_o, y_o, z_o)$ and their center points; Mapping this region onto the spherical observation space whose radius is R, the area covered on sphere is $S\left(A_{ori}\left(x'_o, y'_o, z'_o, \Delta, \sigma\right)\right)$.

(3) In the reference space, the ratio of current processing unit $A_{ori}\left(x'_o, y'_o, z'_o\right)$ corresponding to $(x_o, y_o, z_o)$ in the observation space $W_o$: $E_{ori}\left(A_{ori}\left(x'_o, y'_o, z'_o\right)\right)$ is relate to the location of $S\left(A_{ori}\left(x'_o, y'_o, z'_o\right)\right)$ in the observation space $W_o$, which is not a constant;

(4) The quality Q of $\left(x'_t, y'_t, z'_t\right)$ in the new space to be evaluated $W''_t$, which is corresponding to $\left(x'_o, y'_o, z'_o\right)$ in the new reference space $W''_{rep}$:

$$Q\left(x'_t, y'_t, z'_t\right) = c \cdot E_{proc}\left(A_{proc}\left(x'_t, y'_t, z'_t, \Delta, \sigma\right)\right) \cdot \left| p_t\left(x'_t, y'_t, z'_t\right) - p_o\left(x'_o, y'_o, z'_o\right)\right| \ ,$$

where c is constant (can be set as 1). $p_t\left(x'_t, y'_t, z'_t\right)$ represents the value of pixel at $\left(x'_t, y'_t, z'_t\right)$ in the new space to be evaluated, $p_t\left(x'_o, y'_o, z'_o\right)$ represents the value of pixel at $\left(x'_o, y'_o, z'_o\right)$ in the new reference space;

(5) The quality of the entire image is presented as

$$Quality = \sum_{\left(x'_t, y'_t, z'_t\right) \in W''_t} Q\left(x'_t, y'_t, z'_t\right)$$

**Embodiment 20**

The twentieth embodiment of the patent relates to a digital image quality evaluation method. Several basic definitions need to be made. The observation space $W_o$ to present observing digital images is a sphere. The representation space of digital images to be evaluated $W_t$ is cube map projection (CMP) format. The representation space of reference digital images $W_{rep}$ is CMP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W''_{rep}$ to present images and space to be evaluated $W_t$ is converted to new space to be evaluated $W''_t$;

(2) One pixel $(x_o, y_o, z_o)$ in reference space $W_{rep}$ is corresponding to $\left(x'_o, y'_o, z'_o\right)$ in the new reference space $W'_{rep}$, without loss of generality, the z value in $\left(x'_o, y'_o, z'_o\right)$ is a constant. Assuming the corresponding processing unit $A_{ori}\left(x'_o, y'_o, z'_o, \Delta, \sigma\right)$ is presented as the region of four nearest pixels of pixel $(x_o, y_o, z_o)$ and their center points; Mapping this region onto the spherical observation space whose radius is R, the area covered on sphere is $S\left(A_{ori}\left(x'_o, y'_o, z'_o, \Delta, \sigma\right)\right)$.

(3) In the reference space, the ratio of current processing unit $A_{ori}\left(x'_o, y'_o, z'_o\right)$ corresponding to $(x_o, y_o, z_o)$ in the observation space $W_o$: $E_{ori}\left(A_{ori}\left(x'_o, y'_o, z'_o\right)\right)$ is relate to the location of $S\left(A_{ori}\left(x'_o, y'_o, z'_o\right)\right)$ in the observation space $W_o$, which is not a constant;

(4) The quality Q of $\left(x'_t, y'_t, z'_t\right)$ in the new space to be evaluated $W'_t$, which is corresponding to $\left(x'_o, y'_o, z'_o\right)$ in the new reference space $W'_{rep}$:

$$Q\left(x'_t, y'_t, z'_t\right) = c \cdot E_{proc}\left(A_{proc}\left(x'_t, y'_t, z'_t, \Delta, \sigma\right)\right) \cdot \left| p_t\left(x'_t, y'_t, z'_t\right) - p_o\left(x'_o, y'_o, z'_o\right)\right| \quad ,$$

where c is constant (can be set as 1). $p_t\left(x'_t, y'_t, z'_t\right)$ represents the value of pixel at $\left(x'_t, y'_t, z'_t\right)$ in the new space to be evaluated, $p_t\left(x'_o, y'_o, z'_o\right)$ represents the value of pixel at $\left(x'_o, y'_o, z'_o\right)$ in the new reference space;

(5) The quality of the entire image is presented as

$$Quality = \sum_{\left(x'_t, y'_t, z'_t\right) \in W'_t} Q\left(x'_t, y'_t, z'_t\right)$$

**Embodiment 21**

The twenty-first embodiment of the patent relates to a digital image quality evaluation method. Several basic definitions need to be made. The observation space $W_o$ to present observing digital images is a sphere. The representation space of digital images to be evaluated $W_t$ is cube map projection (CMP) format. The representation space of reference digital images $W_{rep}$ is CMP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W'_{rep}$ to present images and space to be evaluated $W_t$ is converted to new space to be evaluated $W'_t$;

(2) One pixel $(x_t, y_t, z_t)$ in the space to be evaluated $W_t$ is corresponding to $\left(x'_t, y'_t, z'_t\right)$ in the new reference space $W'_t$, without loss of generality, the z value in $\left(x'_t, y'_t, z'_t\right)$ is a constant. Assuming the corresponding processing unit $A_{proc}\left(x'_t, y'_t, z'_t\right)$ is presented as the region of three nearest pixels of pixel $(x_t, y_t, z_t)$ Mapping this region onto the spherical observation space whose radius is R, the area covered on sphere is $S\left(A_{proc}\left(x'_t, y'_t, z'_t\right)\right)$.

(3) In the space to be evaluated, the ratio of current processing unit $A_{proc}\left(x'_t, y'_t, z'_t\right)$ corresponding to $(x_t, y_t, z_t)$ in the observation space $W_o$: $E_{proc}\left(A_{proc}\left(x'_t, y'_t, z'_t\right)\right)$.

$E_{proc}\left(A_{proc}\left(x'_t, y'_t, z'_t\right)\right)$ is relate to the location of $S\left(A_{proc}\left(x'_t, y'_t, z'_t\right)\right)$ in the observation space $W_o$, which is not a constant;

(4) The quality Q of $\left(x'_t, y'_t, z'_t\right)$ in the new space to be evaluated $W'_t$, which is corresponding to $\left(x'_o, y'_o, z'_o\right)$ in the new reference space $W''_{rep}$ :

$$Q\left(x'_t, y'_t, z'_t\right) = c \cdot E_{proc}\left(A_{proc}\left(x'_t, y'_t, z'_t, \Delta, \sigma\right)\right) \cdot \left| p_t\left(x'_t, y'_t, z'_t\right) - p_o\left(x'_o, y'_o, z'_o\right) \right| \quad ,$$

where c is constant (can be set as 1). $p_t\left(x'_t, y'_t, z'_t\right)$ represents the value of pixel at $\left(x'_t, y'_t, z'_t\right)$ in the new space to be evaluated, $p_t\left(x'_o, y'_o, z'_o\right)$ represents the value of pixel at $\left(x'_o, y'_o, z'_o\right)$ in the new reference space;

(5) The quality of the entire image is presented as

$$Quality = \sum_{\left(x'_t, y'_t, z'_t\right) \in W''_t} Q\left(x'_t, y'_t, z'_t\right)$$

**Embodiment 22**

The twenty-second embodiment of the patent relates to a digital image quality evaluation method. Several basic definitions need to be made. The observation space $W_o$ to present observing digital images is a sphere. The representation space of digital images to be evaluated $W_t$ is cube map projection (CMP) format. The representation space of reference digital images $W_{rep}$ is CMP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W''_{rep}$ to present images and space to be evaluated $W_t$ is converted to new space to be evaluated $W''_t$ ;

(2) One pixel $(x_t, y_t, z_t)$ in the space to be evaluated $W_t$ is corresponding to $\left(x'_t, y'_t, z'_t\right)$ in the new reference space $W''_t$, without loss of generality, the z value in $\left(x'_t, y'_t, z'_t\right)$ is a constant. Assuming the corresponding processing unit $A_{proc}\left(x'_t, y'_t, z'_t\right)$ is presented as the region of four nearest pixels of pixel $(x_t, y_t, z_t)$; Mapping this region onto the spherical observation space whose radius is R, the area covered on sphere is $S\left(A_{proc}\left(x'_t, y'_t, z'_t\right)\right)$.

(3) In the space to be evaluated, the ratio of current processing unit $A_{proc}\left(x'_t, y'_t, z'_t\right)$ corresponding to $(x_t, y_t, z_t)$

in the observation space $W_o$: $E_{proc}\left(A_{proc}\left(x_t',y_t',z_t'\right)\right)$.

$E_{proc}\left(A_{proc}\left(x_t',y_t',z_t'\right)\right)$ is relate to the location of $S\left(A_{proc}\left(x_t',y_t',z_t'\right)\right)$ in the observation space $W_o$, which is not a constant;

(4) The quality Q of $\left(x_t',y_t',z_t'\right)$ in the new space to be evaluated $W_t'$, which is corresponding to $\left(x_o',y_o',z_o'\right)$ in the new reference space $W_{rep}''$:

$$Q\left(x_t',y_t',z_t'\right) = c \cdot E_{proc}\left(A_{proc}\left(x_t',y_t',z_t',\Delta,\sigma\right)\right) \cdot \left| p_t\left(x_t',y_t',z_t'\right) - p_o\left(x_o',y_o',z_o'\right) \right| \ ,$$

where c is constant (can be set as 1). $p_t\left(x_t',y_t',z_t'\right)$ represents the value of pixel at $\left(x_t',y_t',z_t'\right)$ in the new space to be evaluated, $p_o\left(x_o',y_o',z_o'\right)$ represents the value of pixel at $\left(x_o',y_o',z_o'\right)$ in the new reference space;

(5) The quality of the entire image is presented as

$$Quality = \sum_{\left(x_t',y_t',z_t'\right) \in W_t'} Q\left(x_t',y_t',z_t'\right)$$

**Embodiment 23**

The twenty-third embodiment of the patent relates to a digital image quality evaluation method. Several basic definitions need to be made. The observation space $W_o$ to present observing digital images is a sphere. The representation space of digital images to be evaluated $W_t$ is cube map projection (CMP) format. The representation space of reference digital images $W_{rep}$ is CMP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W_{rep}''$ to present images and space to be evaluated $W_t$ is converted to new space to be evaluated $W_t'$;

(2) One pixel $(x_t, y_t, z_t)$ in the space to be evaluated $W_t$ is corresponding to $\left(x_t',y_t',z_t'\right)$ in the new reference space $W_t'$, without loss of generality, the z value in $\left(x_t',y_t',z_t'\right)$ is a constant. Assuming the corresponding processing unit $A_{proc}\left(x_t',y_t',z_t'\right)$ is presented as the region of three nearest pixels of pixel $(x_t, y_t, z_t)$ and their center points; Mapping this region onto the spherical observation space whose radius is R, the area covered on sphere is $S\left(A_{proc}\left(x_t',y_t',z_t'\right)\right)$.

(3) In the space to be evaluated, the ratio of current processing unit $A_{proc}\left(x_t',y_t',z_t'\right)$ corresponding to $(x_t, y_t, z_t)$ in the observation space $W_o$: $E_{proc}\left(A_{proc}\left(x_t',y_t',z_t'\right)\right)$.

$E_{proc}\left(A_{proc}\left(x_t',y_t',z_t'\right)\right)$ is relate to the location of $S\left(A_{proc}\left(x_t',y_t',z_t'\right)\right)$ in the observation space $W_o$,

which is not a constant;

(4) The quality Q of $\left(x'_t, y'_t, z'_t\right)$ in the new space to be evaluated $W'_t$, which is corresponding to $\left(x'_o, y'_o, z'_o\right)$

in the new reference space $W'_{rep}$:

$$Q\left(x'_t, y'_t, z'_t\right) = c \cdot E_{proc}\left(A_{proc}\left(x'_t, y'_t, z'_t, \Delta, \sigma\right)\right) \cdot \left| p_t\left(x'_t, y'_t, z'_t\right) - p_o\left(x'_o, y'_o, z'_o\right)\right| \quad ,$$

where c is constant (can be set as 1). $p_t\left(x'_t, y'_t, z'_t\right)$ represents the value of pixel at $\left(x'_t, y'_t, z'_t\right)$ in the new space to be evaluated, $p_t\left(x'_o, y'_o, z'_o\right)$ represents the value of pixel at $\left(x'_o, y'_o, z'_o\right)$ in the new reference space;

(5) The quality of the entire image is presented as

$$Quality = \sum_{\left(x'_t, y'_t, z'_t\right) \in W'_t} Q\left(x'_t, y'_t, z'_t\right)$$

**Embodiment 24**

The twenty-fourth embodiment of the patent relates to a digital image quality evaluation method. Several basic definitions need to be made. The observation space $W_o$ to present observing digital images is a sphere. The representation space of digital images to be evaluated $W_t$ is cube map projection (CMP) format. The representation space of reference digital images $W_{rep}$ is CMP format. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to

new reference space $W'_{rep}$ to present images and space to be evaluated $W_t$ is converted to new space to be evaluated $W'_t$;

(2) One pixel $(x_t, y_t, z_t)$ in the space to be evaluated $W_t$ is corresponding to $\left(x'_t, y'_t, z'_t\right)$ in the new reference space

$W'_t$, without loss of generality, the z value in $\left(x'_t, y'_t, z'_t\right)$ is a constant. Assuming the corresponding processing unit $A_{proc}\left(x'_t, y'_t, z'_t\right)$ is presented as the region of four nearest pixels of pixel $(x_t, y_t, z_t)$ and their center points; Mapping this region onto the spherical observation space whose radius is R, the area covered on sphere is $S\left(A_{proc}\left(x'_t, y'_t, z'_t\right)\right)$.

(3) In the space to be evaluated, the ratio of current processing unit $A_{proc}\left(x'_t, y'_t, z'_t\right)$ corresponding to $(x_t, y_t, z_t)$

in the observation space $W_o$: $E_{proc}\left(A_{proc}\left(x'_t, y'_t, z'_t\right)\right)$.

$E_{proc}\left(A_{proc}\left(x'_t, y'_t, z'_t\right)\right)$ is relate to the location of $S\left(A_{proc}\left(x'_t, y'_t, z'_t\right)\right)$ in the observation space $W_o$, which is not a constant;

(4) The quality Q of $\left(x'_t, y'_t, z'_t\right)$ in the new space to be evaluated $W'_t$, which is corresponding to $\left(x'_o, y'_o, z'_o\right)$

in the new reference space $W''_{rep}$ :

$$Q\left(x'_t, y'_t, z'_t\right) = c \cdot E_{proc}\left(A_{proc}\left(x'_t, y'_t, z'_t, \Delta, \sigma\right)\right) \cdot \left|p_t\left(x'_t, y'_t, z'_t\right) - p_o\left(x'_o, y'_o, z'_o\right)\right| \quad ,$$

where c is constant (can be set as 1). $p_t\left(x'_t, y'_t, z'_t\right)$ represents the value of pixel at $\left(x'_t, y'_t, z'_t\right)$ in the new space to be evaluated, $p_t\left(x'_o, y'_o, z'_o\right)$ represents the value of pixel at $\left(x'_o, y'_o, z'_o\right)$ in the new reference space;

(5) The quality of the entire image is presented as

$$Quality = \sum_{\left(x'_t, y'_t, z'_t\right) \in W''_t} Q\left(x'_t, y'_t, z'_t\right)$$

## Embodiment 25

The twenty-fifth embodiment of the patent relates to a digital image quality evaluation method. Several basic definitions need to be made. The observation space of digital images is $W_o$. The representation space of digital images is $W_{rep}$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W''_{rep}$ to present images and space to be evaluated $W_t$ is converted to new space to be evaluated $W'_t$ ;

(2) One pixel $\mathbf{x_o}$ in reference space $W_{rep}$ is corresponding to $\mathbf{x'_o}$ in the new reference space $W''_{rep}$ . Assuming the corresponding processing unit $A_{ori}\left(\mathbf{x'_o}\right)$ is presented as the region of three nearest pixels of pixel $\mathbf{x_o}$; Mapping this region onto the spherical observation space whose radius is R, the area covered on sphere is $S\left(A_{ori}\left(\mathbf{x'_o}\right)\right)$.

(3) In the reference space, the ratio of current processing unit $A_{ori}\left(\mathbf{x'_o}\right)$ corresponding to $\mathbf{x_o}$ in the observation space $W_o$ : $E_{ori}\left(A_{ori}\left(\mathbf{x'_o}\right)\right)$. $E_{ori}\left(A_{ori}\left(\mathbf{x'_o}\right)\right)$ is relate to the location of $S\left(A_{ori}\left(\mathbf{x'_o}\right)\right)$ in the observation space $W_o$, which is not a constant;

(4) The quality Q of $\mathbf{x'_t}$ in the new space to be evaluated $W'_t$ , which is corresponding to $\mathbf{x'_o}$ in the new reference space $W''_{rep}$ : $Q\left(\mathbf{x'_t}\right) = c \cdot E_{ori}\left(A_{ori}\left(\mathbf{x'_o}\right)\right) \cdot \left|p_t\left(\mathbf{x'_t}\right) - p_o\left(\mathbf{x'_o}\right)\right|$, where c is constant (can be set as 1). $p_t\left(\mathbf{x'_t}\right)$ represents the value of pixel at $\mathbf{x'_t}$ in the new space to be evaluated, $p_t\left(\mathbf{x'_o}\right)$ represents the value of pixel at $\mathbf{x'_o}$ in the new reference space;

(5) The quality of the entire image is presented as

$$Quality = \sum_{\mathbf{x}'_t \in W'_t} Q(\mathbf{x}'_t)$$

**Embodiment 26**

The twenty-sixth embodiment of the patent relates to a digital image quality evaluation method. Several basic definitions need to be made. The observation space of digital images is $W_o$. The representation space of digital images is $W_{rep}$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W''_{rep}$ to present images and space to be evaluated $W_t$ is converted to new space to be evaluated $W''_t$;

(2) One pixel $\mathbf{x_o}$ in reference space $W_{rep}$ is corresponding to $\mathbf{x}'_o$ in the new reference space $W''_{rep}$. .Assuming the corresponding processing unit $A_{ori}(\mathbf{x}'_o)$ is presented as the region of four nearest pixels of pixel $\mathbf{x_o}$; Mapping this region onto the spherical observation space whose radius is R, the area covered on sphere is $S(\overline{A_{ori}(\mathbf{x}'_o)})$.

(3) In the reference space, the ratio of current processing unit $A_{ori}(\mathbf{x}'_o)$ corresponding to $\mathbf{x_o}$ in the observation space $W_o$: $E_{ori}(A_{ori}(\mathbf{x}'_o))$.

$E_{ori}(A_{ori}(\mathbf{x}'_o))$ is relate to the location of $S(A_{ori}(\mathbf{x}'_o))$ in the observation space $W_o$, which is not a constant;

(4) The quality Q of $\mathbf{x}'_t$ in the new space to be evaluated $W''_t$, which is corresponding to $\mathbf{x}'_o$ in the new reference space $W''_{rep}$: $Q(\mathbf{x}'_t) = c \cdot E_{ori}(A_{ori}(\mathbf{x}'_o)) \cdot |p_t(\mathbf{x}'_t) - p_o(\mathbf{x}'_o)|$, where c is constant (can be set as 1).

$p_t(\mathbf{x}'_t)$ represents the value of pixel at $\mathbf{x}'_t$ in the new space to be evaluated, $p_t(\mathbf{x}'_o)$ represents the value of pixel at $\mathbf{x}'_o$ in the new reference space;

(5) The quality of the entire image is presented as

$$Quality = \sum_{\mathbf{x}'_t \in W'_t} Q(\mathbf{x}'_t)$$

**Embodiment 27**

The twenty-seventh embodiment of the patent relates to a digital image quality evaluation method. Several basic definitions need to be made. The observation space of digital images is $W_o$. The representation space of digital images is $W_{rep}$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W''_{rep}$ to present images and space to be evaluated $W_t$ is converted to new space to be evaluated $W''_t$;

(2) One pixel $\mathbf{x_o}$ in reference space $W_{rep}$ is corresponding to $\mathbf{x'_o}$ in the new reference space $W''_{rep}$. Assuming the corresponding processing unit $A_{ori}\left(\mathbf{x'_o}\right)$ is presented as the region of three nearest pixels of pixel $\mathbf{x_o}$ and their center points; Mapping this region onto the spherical observation space whose radius is R, the area covered on sphere is $S\left(A_{ori}\left(\mathbf{x'_o}\right)\right)$.

(3) In the reference space, the ratio of current processing unit $A_{ori}\left(\mathbf{x'_o}\right)$ corresponding to $\mathbf{x_o}$ in the observation space $W_o$: $E_{ori}\left(A_{ori}\left(\mathbf{x'_o}\right)\right)$.

$E_{ori}\left(A_{ori}\left(\mathbf{x'_o}\right)\right)$ is relate to the location of $S\left(A_{ori}\left(\mathbf{x'_o}\right)\right)$ in the observation space $W_o$, which is not a constant;

(4) The quality Q of $\mathbf{x'_t}$ in the new space to be evaluated $W''_t$, which is corresponding to $\mathbf{x'_o}$ in the new reference space $W''_{rep}$: $Q\left(\mathbf{x'_t}\right)=c\cdot E_{ori}\left(A_{ori}\left(\mathbf{x'_o}\right)\right)\cdot\left|p_t\left(\mathbf{x'_t}\right)-p_o\left(\mathbf{x'_o}\right)\right|$, where c is constant (can be set as 1).

$p_t\left(\mathbf{x'_t}\right)$ represents the value of pixel at $\mathbf{x'_t}$ in the new space to be evaluated, $p_t\left(\mathbf{x'_o}\right)$ represents the value of pixel at $\mathbf{x'_o}$ in the new reference space;

(5) The quality of the entire image is presented as

$$Quality = \sum_{\mathbf{x'_t}\in W''_t} Q\left(\mathbf{x'_t}\right)$$

**Embodiment 28**

The twenty-eighth embodiment of the patent relates to a digital image quality evaluation method. Several basic definitions need to be made. The observation space of digital images is $W_o$. The representation space of digital images is $W_t$ and the representation space of reference digital images is $W_{rep}$. The combination of $W_t$, $W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W''_{rep}$ to present images and space to be evaluated $W_t$ is converted to new space to be evaluated $W''_t$;

(2) One pixel $\mathbf{x_o}$ in reference space $W_{rep}$ is corresponding to $\mathbf{x'_o}$ in the new reference space $W''_{rep}$. Assuming the corresponding processing unit $A_{ori}\left(\mathbf{x'_o}\right)$ is presented as the region of four nearest pixels of pixel $\mathbf{x_o}$ and their

center points; Mapping this region onto the spherical observation space whose radius is R, the area covered on sphere is $S\left(A_{ori}\left(\mathbf{x_0'}\right)\right)$.

(3) In the reference space, the ratio of current processing unit $A_{ori}\left(\mathbf{x_0'}\right)$ corresponding to $\mathbf{x_o}$ in the observation space $W_o$: $E_{ori}\left(A_{ori}\left(\mathbf{x_0'}\right)\right)$.

$E_{ori}\left(A_{ori}\left(\mathbf{x_0'}\right)\right)$ is relate to the location of $S\left(A_{ori}\left(\mathbf{x_0'}\right)\right)$ in the observation space $W_o$, which is not a constant;

(4) The quality Q of $\mathbf{x_t'}$ in the new space to be evaluated $W_t'$, which is corresponding to $\mathbf{x_0'}$ in the new reference space $W_{rep}'$: $Q\left(\mathbf{x_t'}\right)=c \cdot E_{ori}\left(A_{ori}\left(\mathbf{x_0'}\right)\right) \cdot \left| p_t\left(\mathbf{x_t'}\right)-p_o\left(\mathbf{x_0'}\right) \right|$, where c is constant (can be set as 1).

$p_t\left(\mathbf{x_t'}\right)$ represents the value of pixel at $\mathbf{x_t'}$ in the new space to be evaluated, $p_t\left(\mathbf{x_0'}\right)$ represents the value of pixel at $\mathbf{x_0'}$ in the new reference space;

(5) The quality of the entire image is presented as

$$Quality = \sum_{\mathbf{x_t'} \in W_t'} Q\left(\mathbf{x_t'}\right)$$

**Embodiment 29**

The twenty-ninth embodiment of the patent relates to a digital image quality evaluation method. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_o$ is converted to new reference space $W_{rep}'$ to present images and space to be evaluated $W_t$ is converted to new space to be evaluated $W_t'$;

(2) One pixel $\mathbf{x_o}$ in reference space $W_{rep}$ is corresponding to $\mathbf{x_0'}$ in the new reference space $W_o'$. Assuming the corresponding processing unit $A_{ori}\left(\mathbf{x_0'}\right)$ is presented as the region within unit length to pixel $\mathbf{x_o}$; Mapping this region onto the spherical observation space whose radius is R, the area covered on sphere is $S\left(A_{ori}\left(\mathbf{x_0'}\right)\right)$.

(3) In the reference space, the ratio of current processing unit $A_{ori}\left(\mathbf{x_0'}\right)$ corresponding to $\mathbf{x_o}$ in the observation space $W_o$: $E_{ori}\left(A_{ori}\left(\mathbf{x_0'}\right)\right)$.

$E_{ori}\left(A_{ori}\left(\mathbf{x_0'}\right)\right)$ is relate to the location of $S\left(A_{ori}\left(\mathbf{x_0'}\right)\right)$ in the observation space $W_o$, which is not a constant;

(4) The quality Q of $\mathbf{x_t'}$ in the new space to be evaluated $W_t'$, which is corresponding to $\mathbf{x_0'}$ in the new reference space $W''_{rep}$ : $Q(\mathbf{x}'_{\mathbf{t}}) = c \cdot E_{ori}\left(A_{ori}(\mathbf{x}'_{\mathbf{o}})\right) \cdot \left|p_t(\mathbf{x}'_t) - p_o(\mathbf{x}'_o)\right|$ , where c is constant (can be set as 1).

$p_t(\mathbf{x}'_t)$ represents the value of pixel at $\mathbf{x}'_t$ in the new space to be evaluated, $p_t(\mathbf{x}'_o)$ represents the value of pixel at $\mathbf{x}'_o$ in the new reference space;

(5) The quality of the entire image is presented as

$$Quality = \sum_{\mathbf{x}'_t \in W''_t} Q(\mathbf{x}'_t)$$

**Embodiment 30**

The thirtieth embodiment of the patent relates to a digital image quality evaluation method. Several basic definitions need to be made. The observation space of digital images is $W_o$. The representation space of digital images is $W_t$ and the representation space of reference digital images is $W_{rep}$. The combination of $W_t$, $W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W''_{rep}$ to present images and space to be evaluated $W_t$ is converted to new space to be evaluated $W'_t$ ;

(2) One pixel $\mathbf{x_o}$ in reference space $W_{rep}$ is corresponding to $\mathbf{x}'_o$ in the new reference space $W''_{rep}$ . Assuming the corresponding processing unit $A_{ori}(\mathbf{x}'_o)$ is presented as the region within unit length to pixel $\mathbf{x_o}$; Mapping this region onto the spherical observation space whose radius is R, the area covered on sphere is $S\left(A_{ori}(\mathbf{x}'_o)\right)$.

(3) In the reference space, the ratio of current processing unit $A_{ori}(\mathbf{x}'_o)$ corresponding to $\mathbf{x_o}$ in the observation space $W_o$ : $E_{ori}\left(A_{ori}(\mathbf{x}'_o)\right)$. $E_{ori}\left(A_{ori}(\mathbf{x}'_o)\right)$ is relate to the location of $S\left(A_{ori}(\mathbf{x}'_o)\right)$ in the observation space $W_o$, which is not a constant;

(4) The quality Q of $\mathbf{x}'_t$ in the new space to be evaluated $W'_t$ , which is corresponding to $\mathbf{x}'_o$ in the new reference space $W''_{rep}$ : $Q(\mathbf{x}'_t) = c \cdot E_{ori}\left(A_{ori}(\mathbf{x}'_o)\right) \cdot \left|p_t(\mathbf{x}'_t) - p_o(\mathbf{x}'_o)\right|$ , where c is constant (can be set as 1).

$p_t(\mathbf{x}'_t)$ represents the value of pixel at $\mathbf{x}'_t$ in the new space to be evaluated, $p_t(\mathbf{x}'_o)$ represents the value of pixel at $\mathbf{x}'_o$ in the new reference space;

(5) The quality of the entire image is presented as

$$Quality = \sum_{\mathbf{x}'_t \in W''_t} Q(\mathbf{x}'_t)$$

**Embodiment 31**

The thirty-first embodiment of the patent relates to a digital image quality evaluation method. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W''_{rep}$ to present images and space to be evaluated $W_t$ is converted to new space to be evaluated $W''_t$;

(2) One pixel $\mathbf{x_t}$ in the space to be evaluated $W_t$ is corresponding to $\mathbf{x'_t}$ in the new space to be evaluated $W''_t$. Assuming the corresponding processing unit $A_{proc}\left(\mathbf{x'_t}\right)$ is presented as the region of three nearest pixels of pixel $\mathbf{X_t}$; Mapping this region onto the spherical observation space whose radius is R, the area covered on sphere is $S\left(A_{proc}\left(\mathbf{x'_t}\right)\right)$.

(3) In the space to be evaluated, the ratio of area of $S\left(A_{proc}\left(\mathbf{x'_t}\right)\right)$ of current processing unit $A_{proc}\left(\mathbf{x'_t}\right)$ corresponding to $\mathbf{X_t}$ in the observation space $W_o$ :

$$E_{proc}\left(A_{proc}\left(\mathbf{x'_t}\right)\right).$$

$E_{proc}\left(A_{proc}\left(\mathbf{x'_t}\right)\right)$ is relate to the location of $S\left(A_{proc}\left(\mathbf{x'_t}\right)\right)$ in the observation space $W_o$, which is not a constant;

(4) The quality Q of $\mathbf{x'_t}$ in the new space to be evaluated $W''_t$, which is corresponding to $\mathbf{x'_o}$ in the new reference space $W''_{rep}$: $\quad Q\left(\mathbf{x'_t}\right) = c \cdot E_{ori}\left(A_{ori}\left(\mathbf{x'_o}\right)\right) \cdot \left| p_t\left(\mathbf{x'_t}\right) - p_o\left(\mathbf{x'_o}\right)\right|$, where c is constant (can be set as 1).

$p_t\left(\mathbf{x'_t}\right)$ represents the value of pixel at $\mathbf{x'_t}$ in the new space to be evaluated, $p_t\left(\mathbf{x'_o}\right)$ represents the value of pixel at $\mathbf{x'_o}$ in the new reference space;

(5) The quality of the entire image is presented as

$$Quality = \sum_{\mathbf{x'_t} \in W''_t} Q\left(\mathbf{x'_t}\right)$$

**Embodiment 32**

The thirty-second embodiment of the patent relates to a digital image quality evaluation method. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W'_{rep}$ to present images and space to be evaluated $W_t$ is converted to new space to be evaluated $W'_t$;

(2) One pixel $\mathbf{X}_t$ in the space to be evaluated $W_t$ is corresponding to $\mathbf{x}'_t$ in the new space to be evaluated $W'_t$. Assuming the corresponding processing unit $A_{proc}\left(\mathbf{x}'_t\right)$ is presented as the region of four nearest pixels of pixel $\mathbf{X}_t$; Mapping this region onto the spherical observation space whose radius is R, the area covered on sphere is $S\left(A_{proc}\left(\mathbf{x}'_t\right)\right)$.

(3) In the space to be evaluated, the ratio of area of $S\left(A_{proc}\left(\mathbf{x}'_t\right)\right)$ of current processing unit $A_{proc}\left(\mathbf{x}'_t\right)$ corresponding to $\mathbf{X}_t$ in the observation space $W_o$: $E_{proc}\left(A_{proc}\left(\mathbf{x}'_t\right)\right)$.

$E_{proc}\left(A_{proc}\left(\mathbf{x}'_t\right)\right)$ is relate to the location of $S\left(A_{proc}\left(\mathbf{x}'_t\right)\right)$ in the observation space $W_o$, which is not a constant;

(4) The quality Q of $\mathbf{x}'_t$ in the new space to be evaluated $W'_t$, which is corresponding to $\mathbf{x}'_o$ in the new reference space $W'_{rep}$: $Q\left(\mathbf{x}'_t\right) = c \cdot E_{ori}\left(A_{ori}\left(\mathbf{x}'_o\right)\right) \cdot \left| p_t\left(\mathbf{x}'_t\right) - p_o\left(\mathbf{x}'_o\right) \right|$, where c is constant (can be set as 1). $p_t\left(\mathbf{x}'_t\right)$ represents the value of pixel at $\mathbf{x}'_t$ in the new space to be evaluated, $p_t\left(\mathbf{x}'_o\right)$ represents the value of pixel at $\mathbf{x}'_o$ in the new reference space;

(5) The quality of the entire image is presented as

$$Quality = \sum_{\mathbf{x}'_t \in W'_t} Q\left(\mathbf{x}'_t\right)$$

**Embodiment 33**

The thirty-third embodiment of the patent relates to a digital image quality evaluation method. Several basic definitions need to be made. The observation space of digital images is $W_o$. The representation space of digital images is $W_t$ and the representation space of reference digital images is $W_{rep}$. The combination of $W_t$, $W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W'_{rep}$ to present images and space to be evaluated $W_t$ is converted to new space to be evaluated $W'_t$;

(2) One pixel $\mathbf{X}_t$ in the space to be evaluated $W_t$ is corresponding to $\mathbf{x}'_t$ in the new space to be evaluated $W'_t$.

Assuming the corresponding processing unit $A_{proc}\left(\mathbf{x'_t}\right)$ is presented as the region of three nearest pixels of pixel $\mathbf{X}_t$ and their center points; Mapping this region onto the spherical observation space whose radius is R, the area covered on sphere is $S\left(A_{proc}\left(\mathbf{x'_t}\right)\right)$.

(3) In the space to be evaluated, the ratio of area of $S\left(A_{proc}\left(\mathbf{x'_t}\right)\right)$ of current processing unit $A_{proc}\left(\mathbf{x'_t}\right)$ corresponding to $\mathbf{X}_t$ in the observation space $W_o$:

$$E_{proc}\left(A_{proc}\left(\mathbf{x'_t}\right)\right).$$

$E_{proc}\left(A_{proc}\left(\mathbf{x'_t}\right)\right)$ is relate to the location of $S\left(A_{proc}\left(\mathbf{x'_t}\right)\right)$ in the observation space $W_o$, which is not a constant;

(4) The quality Q of $\mathbf{x'_t}$ in the new space to be evaluated $W'_t$, which is corresponding to $\mathbf{x'_o}$ in the new reference space $W'_{rep}$: $Q\left(\mathbf{x'_t}\right)=c\cdot E_{ori}\left(A_{ori}\left(\mathbf{x'_o}\right)\right)\cdot\left|p_t\left(\mathbf{x'_t}\right)-p_o\left(\mathbf{x'_o}\right)\right|$, where c is constant (can be set as 1). $p_t\left(\mathbf{x'_t}\right)$ represents the value of pixel at $\mathbf{x'_t}$ in the new space to be evaluated, $p_t\left(\mathbf{x'_o}\right)$ represents the value of pixel at $\mathbf{x'_o}$ in the new reference space;

(5) The quality of the entire image is presented as

$$Quality=\sum_{\mathbf{x'_t}\in W'_t}Q\left(\mathbf{x'_t}\right)$$

**Embodiment 34**

The thirty-fourth embodiment of the patent relates to a digital image quality evaluation method. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W'_{rep}$ to present images and space to be evaluated $W_t$ is converted to new space to be evaluated $W'_t$;

(2) One pixel $\mathbf{X}_t$ in the space to be evaluated $W_t$ is corresponding to $\mathbf{x'_t}$ in the new space to be evaluated $W'_t$. $W_t$ Assuming the corresponding processing unit $A_{proc}\left(\mathbf{x'_t}\right)$ is presented as the region of four nearest pixels of pixel $\mathbf{X}_t$ and their center points; Mapping this region onto the spherical observation space whose radius is R, the area covered on sphere is $S\left(A_{proc}\left(\mathbf{x'_t}\right)\right)$.

(3) In the space to be evaluated, the ratio of area of $S\left(A_{proc}\left(\mathbf{x'_t}\right)\right)$ of current processing unit $A_{proc}\left(\mathbf{x'_t}\right)$

corresponding to $\mathbf{X}_t$ in the observation space $W_o$: $E_{proc}\left(A_{proc}\left(\mathbf{x}'_t\right)\right)$.

$E_{proc}\left(A_{proc}\left(\mathbf{x}'_t\right)\right)$ is relate to the location of $S\left(A_{proc}\left(\mathbf{x}'_t\right)\right)$ in the observation space $W_o$, which is not a constant;

(4) The quality Q of $\mathbf{x}'_t$ in the new space to be evaluated $W'_t$, which is corresponding to $\mathbf{x}'_0$ in the new reference space $W'_{rep}$: $Q\left(\mathbf{x}'_t\right)=c\cdot E_{ori}\left(A_{ori}\left(\mathbf{x}'_0\right)\right)\cdot\left|p_t\left(\mathbf{x}'_t\right)-p_o\left(\mathbf{x}'_0\right)\right|$, where c is constant (can be set as 1). $p_t\left(\mathbf{x}'_t\right)$ represents the value of pixel at $\mathbf{x}'_t$ in the new space to be evaluated, $p_t\left(\mathbf{x}'_0\right)$ represents the value of pixel at $\mathbf{x}'_0$ in the new reference space;

(5) The quality of the entire image is presented as

$$Quality = \sum_{\mathbf{x}'_t \in W'_t} Q\left(\mathbf{x}'_t\right)$$

**Embodiment 35**

The thirty-fifth embodiment of the patent relates to a digital image quality evaluation method. Several basic definitions need to be made. The observation space of digital images is $W_o$. The representation space of digital images is $W_t$ and the representation space of reference digital images is $W_{rep}$. The combination of $W_t$, $W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W'_{rep}$ to present images and space to be evaluated $W_t$ is converted to new space to be evaluated $W'_t$;

(2) One pixel $\mathbf{X}_t$ in the space to be evaluated $W_t$ is corresponding to $\mathbf{x}'_t$ in the new space to be evaluated $W'_t$. Assuming the corresponding processing unit $A_{proc}\left(\mathbf{x}'_t\right)$ is presented as within unit length to pixel $\mathbf{X}_t$; Mapping this region onto the spherical observation space whose radius is R, the area covered on sphere is $S\left(\hat{A}_{proc}\left(\mathbf{x}'_t\right)\right)$.

(3) In the space to be evaluated, the ratio of area of $S\left(A_{proc}\left(\mathbf{x}'_t\right)\right)$ of current processing unit $A_{proc}\left(\mathbf{x}'_t\right)$ corresponding to $\mathbf{X}_t$ in the observation space $W_o$: $E_{proc}\left(A_{proc}\left(\mathbf{x}'_t\right)\right)$.

$E_{proc}\left(A_{proc}\left(\mathbf{x}'_t\right)\right)$ is relate to the location of $S\left(A_{proc}\left(\mathbf{x}'_t\right)\right)$ in the observation space $W_o$, which is not a constant;

(4) The quality Q of $\mathbf{x}'_t$ in the new space to be evaluated $W'_t$, which is corresponding to $\mathbf{x}'_0$ in the new reference space $W'_{rep}$: $Q\left(\mathbf{x}'_t\right)=c\cdot E_{ori}\left(A_{ori}\left(\mathbf{x}'_0\right)\right)\cdot\left|p_t\left(\mathbf{x}'_t\right)-p_o\left(\mathbf{x}'_0\right)\right|$, where c is constant (can be set as 1). $p_t\left(\mathbf{x}'_t\right)$ represents the value of pixel at $\mathbf{x}'_t$ in the new space to be evaluated, $p_t\left(\mathbf{x}'_0\right)$ represents the value of

pixel at $\mathbf{x}_0'$ in the new reference space;

(5) The quality of the entire image is presented as

$$Quality = \sum_{\mathbf{x}_t' \in W_t'} Q(\mathbf{x}_t')$$

## Embodiment 36

The thirty-sixth embodiment of the patent relates to a digital image quality evaluation method. Several basic definitions need to be made. The observation space of digital images is $W_o$. The representation space of digital images is $W_t$ and the representation space of reference digital images is $W_{rep}$. The combination of $W_t$, $W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality of digital images in the space to be evaluated is calculated as follows:

(1) The space to be evaluated $W_t$ and the reference space $W_{rep}$ can be represented by affine transformation. To make sure that each pixel in the space to be evaluated $W_t$ has corresponding pixel in the reference space $W_{rep}$, up-sampling and down-sampling can be operated if it is necessary, after which reference space $W_{rep}$ is converted to new reference space $W_{rep}'$ to present images and space to be evaluated $W_t$ is converted to new space to be evaluated $W_t'$;

(2) One pixel $\mathbf{X}_t$ in the space to be evaluated $W_t$ is corresponding to $\mathbf{x}_t'$ in the new space to be evaluated $W_t'$. Assuming the corresponding processing unit $A_{proc}(\mathbf{x}_t')$ is presented as within unit length to pixel $\mathbf{X}_t$ and its center point; Mapping this region onto the spherical observation space whose radius is R, the area covered on sphere is $S(A_{proc}(\mathbf{x}_t'))$.

(3) In the space to be evaluated, the ratio of area of $S(A_{proc}(\mathbf{x}_t'))$ of current processing unit $A_{proc}(\mathbf{x}_t')$ corresponding to $\mathbf{X}_t$ in the observation space $W_o$ : $E_{proc}(A_{proc}(\mathbf{x}_t'))$.

$E_{proc}(A_{proc}(\mathbf{x}_t'))$ is relate to the location of $S(A_{proc}(\mathbf{x}_t'))$ in the observation space $W_o$, which is not a constant;

(4) The quality Q of $\mathbf{x}_t'$ in the new space to be evaluated $W_t'$, which is corresponding to $\mathbf{x}_0'$ in the new reference space $W_{rep}'$ : $Q(\mathbf{x}_t') = c \cdot E_{ori}(A_{ori}(\mathbf{x}_0')) \cdot |p_t(\mathbf{x}_t') - p_o(\mathbf{x}_0')|$, where c is constant (can be set as 1). $p_t(\mathbf{x}_t')$ represents the value of pixel at $\mathbf{x}_t'$ in the new space to be evaluated, $p_t(\mathbf{x}_0')$ represents the value of pixel at $\mathbf{x}_0'$ in the new reference space;

(5) The quality of the entire image is presented as

$$Quality = \sum_{\mathbf{x}_t' \in W_t'} Q(\mathbf{x}_t')$$

## Embodiment 37

The thirty-seventh embodiment of the patent relates to a digital image quality evaluation apparatus. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality module of digital images in the space to be evaluated is described as follows:

(1) Distortion generation module, convert current processing unit $A_{proc}$ in the space to be evaluated $W_t$ to the new space to be evaluated $W_t'$, which is the same as reference space $W_{rep}$. Calculate the difference of pixels in pixel group of digital images between the current processing unit $A_{proc}'$ in converted space to be evaluated and the current processing unit $A_{ori}$ in reference space $W_{rep}$, and obtain the distortion value $D_{proc}\left(A_{ori}, A_{proc}'\right)$ in current processing unit $A_{proc}$ by summing the absolute value of differences.

(2) Weighted distortion processing module, map the current processing unit $A_{proc}$ in the space to be evaluated $W_t$ to the observation space, the ratio of area $S(A_{proc})$ in current processing unit $A_{proc}$ of space to be evaluated to observation space $W_o$ can be presented as $E_{proc}(A_{proc})$, and $E_{proc}(A_{proc})$ is relate to the location of $S(A_{proc})$ in the observation space $W_o$, which is not a constant;

(3) The region surrounded by three nearest processing units of current processing unit is marked as $B_{proc}$. Mapping this region into observation space, the area is $S(B_{proc})$. And the ratio of this mapping area on whole sphere is $E_{proc}(A_{proc})= S(B_{proc})$/whole area on observation space. The distortion value is multiplied by this ratio $E_{proc}(A_{proc})$.

(4) Quality evaluation module, using the processed distortion $D_{proc}\left(A_{ori}, A_{proc}'\right)$ of current processing unit $A_{proc}$ in the whole space to be evaluated and the corresponding weights $E_{proc}(A_{proc})$ of pixel group to evaluate the quality of digital images in the space to be evaluated. The final quality of digital image in observation space is:

$$Quality = \sum_{A_{ori} \in W_o', A_{proc} \in W_t} c \cdot E_{proc}\left(A_{proc}\right) \cdot D_{proc}\left(A_{ori}, A_{proc}'\right)$$

And c is a constant, which can be 1.

**Embodiment 38**

The thirty-eighth embodiment of the patent relates to a digital image quality evaluation apparatus. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality module of digital images in the space to be evaluated is described as follows:

(1) Distortion generation module, convert current processing unit $A_{proc}$ in the space to be evaluated $W_t$ to the new space to be evaluated $W_t'$, which is the same as reference space $W_{rep}$. Calculate the difference of pixels in pixel group of digital images between the current processing unit $A_{proc}'$ in converted space to be evaluated and the current processing unit $A_{ori}$ in reference space $W_{rep}$, and obtain the distortion value $D_{proc}\left(A_{ori}, A_{proc}'\right)$ in current processing unit $A_{proc}$ by summing the absolute value of differences.

(2) Weighted distortion processing module, map the current processing unit $A_{ori}$ in reference space $W_{rep}$ to the observation space, the ratio of area $S(A_{ori})$ in current processing unit $A_{ori}$ of reference space to observation space $W_o$ can be presented as $E_{ori}(A_{ori})$, and $E_{ori}(A_{ori})$ is relate to the location of $S(A_{ori})$ in the observation space $W_o$, which is not a constant;

(3) The region surrounded by three nearest processing units of current processing unit is marked as $B_{ori}$. Mapping

this region into observation space, the area is $S(B_{ori})$. And the ratio of this mapping area on whole sphere is $E_{ori}(A_{ori})= S(B_{ori})$/whole area on observation space. The distortion value is multiplied by this ratio $E_{ori}(A_{ori})$.

(4) Quality evaluation module, using the processed distortion $D_{proc}\left(A_{ori}, A'_{proc}\right)$ of current processing unit $A_{ori}$ in the whole space to be evaluated and the corresponding weights $E_{ori}(A_{ori})$ of pixel group to evaluate the quality of digital images in the space to be evaluated. The final quality of digital image in observation space is:

$$Quality = \sum_{A_{ori} \in W_o, A_{proc} \in W'_t} c \cdot E_{ori}\left(A_{ori}\right) \cdot D_{proc}\left(A'_{ori}, A_{proc}\right)$$

And c is a constant, which can be 1.

**Embodiment 39**

The thirty-ninth embodiment of the patent relates to a digital image quality evaluation apparatus. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality module of digital images in the space to be evaluated is described as follows:

(1) Distortion generation module, convert current processing unit $A_{proc}$ in the space to be evaluated $W_t$ to the new space to be evaluated $W'_t$, which is the same as reference space $W_{rep}$. Calculate the difference of pixels in pixel group of digital images between the current processing unit $A'_{proc}$ in converted space to be evaluated and the current processing unit $A_{ori}$ in reference space $W_{rep}$, and obtain the distortion value $D_{proc}\left(A_{ori}, A'_{proc}\right)$ in current processing unit $A_{proc}$ by summing the absolute value of differences.

(2) Weighted distortion processing module, map the current processing unit $A_{proc}$ in the space to be evaluated $W_t$ to the observation space, the ratio of area $S(A_{proc})$ in current processing unit $A_{proc}$ of space to be evaluated to observation space $W_o$ can be presented as $E_{proc}(A_{proc})$, and $E_{proc}(A_{proc})$ is relate to the location of $S(A_{proc})$ in the observation space $W_o$, which is not a constant;

(3) The region surrounded by four nearest processing units of current processing unit is marked as $B_{proc}$. Mapping this region into observation space, the area is $S(B_{proc})$. And the ratio of this mapping area on whole sphere is $E_{proc}(A_{proc})= S(B_{proc})$/whole area on observation space. The distortion value is multiplied by this ratio $E_{proc}(A_{proc})$.

(4) Quality evaluation module, using the processed distortion $D_{proc}\left(A_{ori}, A'_{proc}\right)$ of current processing unit $A_{proc}$ in the whole space to be evaluated and the corresponding weights $E_{proc}(A_{proc})$ of pixel group to evaluate the quality of digital images in the space to be evaluated. The final quality of digital image in observation space is:

$$Quality = \sum_{A_{ori} \in W'_o, A_{proc} \in W_t} c \cdot E_{proc}\left(A_{proc}\right) \cdot D_{proc}\left(A_{ori}, A'_{proc}\right)$$

And c is a constant, which can be 1.

**Embodiment 40**

The fortieth embodiment of the patent relates to a digital image quality evaluation apparatus. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality module of digital images in the space to be evaluated is described as follows:

(1) Distortion generation module, convert current processing unit $A_{proc}$ in the space to be evaluated $W_t$ to the new space to be evaluated $W_t'$, which is the same as reference space $W_{rep}$. Calculate the difference of pixels in pixel group of digital images between the current processing unit $A_{proc}'$ in converted space to be evaluated and the current processing unit $A_{ori}$ in reference space $W_{rep}$, and obtain the distortion value $D_{proc}\left(A_{ori}, A_{proc}'\right)$ in current processing unit $A_{proc}$ by summing the absolute value of differences.

(2) Weighted distortion processing module, map the current processing unit $A_{ori}$ in reference space $W_{rep}$ to the observation space, the ratio of area $S(A_{ori})$ in current processing unit $A_{ori}$ of reference space to observation space $W_o$ can be presented as $E_{ori}(A_{ori})$, and $E_{ori}(A_{ori})$ is relate to the location of $S(A_{ori})$ in the observation space $W_o$, which is not a constant;

(3) The region surrounded by four nearest processing units of current processing unit is marked as $B_{ori}$. Mapping this region into observation space, the area is $S(B_{ori})$. And the ratio of this mapping area on whole sphere is $E_{ori}(A_{ori})$ = $S(B_{ori})$/whole area on observation space. The distortion value is multiplied by this ratio $E_{ori}(A_{ori})$.

(4) Quality evaluation module, using the processed distortion $D_{proc}\left(A_{ori}, A_{proc}'\right)$ of current processing unit $A_{ori}$ in the whole space to be evaluated and the corresponding weights $E_{ori}(A_{ori})$ of pixel group to evaluate the quality of digital images in the space to be evaluated. The final quality of digital image in observation space is:

$$Quality = \sum_{A_{ori}\in W_o, A_{proc}\in W_t'} c \cdot E_{ori}\left(A_{ori}\right) \cdot D_{proc}\left(A_{ori}', A_{proc}\right)$$

And c is a constant, which can be 1.

**Embodiment 41**

The forty-first embodiment of the patent relates to a digital image quality evaluation apparatus. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality module of digital images in the space to be evaluated is described as follows:

(1) Distortion generation module, convert current processing unit $A_{proc}$ in the space to be evaluated $W_t$ to the new space to be evaluated $W_t'$, which is the same as reference space $W_{rep}$. Calculate the difference of pixels in pixel group of digital images between the current processing unit $A_{proc}'$ in converted space to be evaluated and the current processing unit $A_{ori}$ in reference space $W_{rep}$, and obtain the distortion value $D_{proc}\left(A_{ori}, A_{proc}'\right)$ in current processing unit $A_{proc}$ by summing the absolute value of differences.

(2) Weighted distortion processing module, map the current processing unit $A_{proc}$ in the space to be evaluated $W_t$ to the observation space, the ratio of area $S(A_{proc})$ in current processing unit $A_{proc}$ of space to be evaluated to observation space $W_o$ can be presented as $E_{proc}(A_{proc})$, and $E_{proc}(A_{proc})$ is relate to the location of $S(A_{proc})$ in the observation space $W_o$, which is not a constant;

(3) The region surrounded by three nearest processing units and the center point of current processing unit is marked as $B_{proc}$. Mapping this region into observation space, the area is $S(B_{proc})$. And the ratio of this mapping area on whole sphere is $E_{proc}(A_{proc})$ = $S(B_{proc})$/whole area on observation space. The distortion value is multiplied by this ratio $E_{proc}(A_{proc})$ .

(4) Quality evaluation module, using the processed distortion $D_{proc}\left(A_{ori}, A'_{proc}\right)$ of current processing unit $A_{proc}$ in the whole space to be evaluated and the corresponding weights $E_{proc}(A_{proc})$ of pixel group to evaluate the quality of digital images in the space to be evaluated. The final quality of digital image in observation space is:

$$Quality = \sum_{A_{ori} \in W'_o, A_{proc} \in W_t} c \cdot E_{proc}\left(A_{proc}\right) \cdot D_{proc}\left(A_{ori}, A'_{proc}\right)$$

And c is a constant, which can be 1.

**Embodiment 42**

The forty-second embodiment of the patent relates to a digital image quality evaluation apparatus. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality module of digital images in the space to be evaluated is described as follows:

(1) Distortion generation module, convert current processing unit $A_{proc}$ in the space to be evaluated $W_t$ to the new space to be evaluated $W'_t$, which is the same as reference space $W_{rep}$. Calculate the difference of pixels in pixel group of digital images between the current processing unit $A'_{proc}$ in converted space to be evaluated and the current processing unit $A_{ori}$ in reference space $W_{rep}$, and obtain the distortion value $D_{proc}\left(A_{ori}, A'_{proc}\right)$ in current processing unit $A_{proc}$ by summing the absolute value of differences.

(2) Weighted distortion processing module, map the current processing unit $A_{ori}$ in reference space $W_{rep}$ to the observation space, the ratio of area $S(A_{ori})$ in current processing unit $A_{ori}$ of reference space to observation space $W_o$ can be presented as $E_{ori}(A_{ori})$, and $E_{ori}(A_{ori})$ is relate to the location of $S(A_{ori})$ in the observation space $W_o$, which is not a constant;

(3) The region surrounded by three nearest processing units and the center point of current processing unit is marked as $B_{ori}$. Mapping this region into observation space, the area is $S(B_{ori})$. And the ratio of this mapping area on whole sphere is $E_{ori}(A_{ori}) = S(B_{ori})$/whole area on observation space. The distortion value is multiplied by this ratio $E_{ori}(A_{ori})$.

(4) Quality evaluation module, using the processed distortion $D_{proc}\left(A_{ori}, A'_{proc}\right)$ of current processing unit $A_{ori}$ in the whole space to be evaluated and the corresponding weights $E_{ori}(A_{ori})$ of pixel group to evaluate the quality of digital images in the space to be evaluated. The final quality of digital image in observation space is:

$$Quality = \sum_{A_{ori} \in W_o, A_{proc} \in W'_t} c \cdot E_{ori}\left(A_{ori}\right) \cdot D_{proc}\left(A'_{ori}, A_{proc}\right)$$

And c is a constant, which can be 1.

**Embodiment 43**

The forty-third embodiment of the patent relates to a digital image quality evaluation apparatus. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality module of digital images in the space to be evaluated is described as follows:

(1) Distortion generation module, convert current processing unit $A_{proc}$ in the space to be evaluated $W_t$ to the new space to be evaluated $W_t'$ , which is the same as reference space $W_{rep}$. Calculate the difference of pixels in pixel group of digital images between the current processing unit $A_{proc}'$ in converted space to be evaluated and the current processing unit $A_{ori}$ in reference space $W_{rep}$, and obtain the distortion value $D_{proc}\left(A_{ori}, A_{proc}'\right)$ in current processing unit $A_{proc}$ by summing the absolute value of differences.

(2) Weighted distortion processing module, map the current processing unit $A_{proc}$ in the space to be evaluated $W_t$ to the observation space, the ratio of area $S(A_{proc})$ in current processing unit $A_{proc}$ of space to be evaluated to observation space $W_o$ can be presented as $E_{proc}(A_{proc})$, and $E_{proc}(A_{proc})$ is relate to the location of $S(A_{proc})$ in the observation space $W_o$, which is not a constant;

(3) The region surrounded by four nearest processing units and the center point of current processing unit is marked as $B_{proc}$. Mapping this region into observation space, the area is $S(B_{proc})$. And the ratio of this mapping area on whole sphere is $E_{proc}(A_{proc}) = S(B_{proc})$/whole area on observation space. The distortion value is multiplied by this ratio $E_{proc}(A_{proc})$ .

(4) Quality evaluation module, using the processed distortion $D_{proc}\left(A_{ori}, A_{proc}'\right)$ of current processing unit $A_{proc}$ in the whole space to be evaluated and the corresponding weights $E_{proc}(A_{proc})$ of pixel group to evaluate the quality of digital images in the space to be evaluated. The final quality of digital image in observation space is:

$$Quality = \sum_{A_{ori} \in W_o', A_{proc} \in W_t} c \cdot E_{proc}\left(A_{proc}\right) \cdot D_{proc}\left(A_{ori}, A_{proc}'\right)$$

And c is a constant, which can be 1.

**Embodiment 44**

The forty-fourth embodiment of the patent relates to a digital image quality evaluation apparatus. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality module of digital images in the space to be evaluated is described as follows:

(1) Distortion generation module, convert current processing unit $A_{proc}$ in the space to be evaluated $W_t$ to the new space to be evaluated $W_t'$ , which is the same as reference space $W_{rep}$. Calculate the difference of pixels in pixel group of digital images between the current processing unit $A_{proc}'$ in converted space to be evaluated and the current processing unit $A_{ori}$ in reference space $W_{rep}$, and obtain the distortion value $D_{proc}\left(A_{ori}, A_{proc}'\right)$ in current processing unit $A_{proc}$ by summing the absolute value of differences.

(2) Weighted distortion processing module, map the current processing unit $A_{ori}$ in reference space $W_{rep}$ to the observation space, the ratio of area $S(A_{ori})$ in current processing unit $A_{ori}$ of reference space to observation space $W_o$ can be presented as $E_{ori}(A_{ori})$, and $E_{ori}(A_{ori})$ is relate to the location of $S(A_{ori})$ in the observation space $W_o$, which is not a constant;

(3) The region surrounded by four nearest processing units and the center point of current processing unit is marked as $B_{ori}$. Mapping this region into observation space, the area is $S(B_{ori})$. And the ratio of this mapping area on whole sphere is $E_{ori}(A_{ori}) = S(B_{ori})$/whole area on observation space. The distortion value is multiplied by this ratio $E_{ori}(A_{ori})$.

(4) Quality evaluation module, using the processed distortion $D_{proc}\left(A_{ori}, A'_{proc}\right)$ of current processing unit $A_{ori}$ in the whole space to be evaluated and the corresponding weights $E_{ori}(A_{ori})$ of pixel group to evaluate the quality of digital images in the space to be evaluated. The final quality of digital image in observation space is:

$$Quality = \sum_{A_{ori} \in W_o, A_{proc} \in W'_t} c \cdot E_{ori}\left(A_{ori}\right) \cdot D_{proc}\left(A'_{ori}, A_{proc}\right)$$

And c is a constant, which can be 1.

**Embodiment 45**

The forty-fifth embodiment of the patent relates to a digital image quality evaluation apparatus. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality module of digital images in the space to be evaluated is described as follows:

(1) Distortion generation module, convert current processing unit $A_{proc}$ in the space to be evaluated $W_t$ to the new space to be evaluated $W'_t$, which is the same as reference space $W_{rep}$. Calculate the difference of pixels in pixel group of digital images between the current processing unit $A'_{proc}$ in converted space to be evaluated and the current processing unit $A_{ori}$ in reference space $W_{rep}$, and obtain the distortion value $D_{proc}\left(A_{ori}, A'_{proc}\right)$ in current processing unit $A_{proc}$ by summing the absolute value of differences.

(2) Weighted distortion processing module, map the current processing unit $A_{proc}$ in the space to be evaluated $W_t$ to the observation space, the ratio of area $S(A_{proc})$ in current processing unit $A_{proc}$ of space to be evaluated to observation space $W_o$ can be presented as $E_{proc}(A_{proc})$, and $E_{proc}(A_{proc})$ is relate to the location of $S(A_{proc})$ in the observation space $W_o$, which is not a constant;

(3) The region within unit length of current processing unit is marked as $B_{proc}$. Mapping this region into observation space, the area is $S(B_{proc})$. And the ratio of this mapping area on whole sphere is $E_{proc}(A_{proc}) = S(B_{proc})$/whole area on observation space. The distortion value is multiplied by this ratio $E_{proc}(A_{proc})$.

(4) Quality evaluation module, using the processed distortion $D_{proc}\left(A_{ori}, A'_{proc}\right)$ of current processing unit $A_{proc}$ in the whole space to be evaluated and the corresponding weights $E_{proc}(A_{proc})$ of pixel group to evaluate the quality of digital images in the space to be evaluated. The final quality of digital image in observation space is:

$$Quality = \sum_{A_{ori} \in W''_o, A_{proc} \in W_t} c \cdot E_{proc}\left(A_{proc}\right) \cdot D_{proc}\left(A_{ori}, A'_{proc}\right)$$

And c is a constant, which can be 1.

**Embodiment 46**

The forty-sixth embodiment of the patent relates to a digital image quality evaluation apparatus. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality module of digital images in the space to be evaluated is described as follows:

(1) Distortion generation module, convert current processing unit $A_{proc}$ in the space to be evaluated $W_t$ to the new space to be evaluated $W_t'$, which is the same as reference space $W_{rep}$. Calculate the difference of pixels in pixel group of digital images between the current processing unit $A_{proc}'$ in converted space to be evaluated and the current processing unit $A_{ori}$ in reference space $W_{rep}$, and obtain the distortion value $D_{proc}\left(A_{ori}, A_{proc}'\right)$ in current processing unit $A_{proc}$ by summing the absolute value of differences.

(2) Weighted distortion processing module, map the current processing unit $A_{ori}$ in reference space $W_{rep}$ to the observation space, the ratio of area $S(A_{ori})$ in current processing unit $A_{ori}$ of reference space to observation space $W_o$ can be presented as $E_{ori}(A_{ori})$, and $E_{ori}(A_{ori})$ is relate to the location of $S(A_{ori})$ in the observation space $W_o$, which is not a constant;

(3) The region within unit length of current processing unit is marked as $B_{ori}$. Mapping this region into observation space, the area is $S(B_{ori})$. And the ratio of this mapping area on whole sphere is $E_{ori}(A_{ori}) = S(B_{ori})$/whole area on observation space. The distortion value is multiplied by this ratio $E_{ori}(A_{ori})$.

(4) Quality evaluation module, using the processed distortion $D_{proc}\left(A_{ori}, A_{proc}'\right)$, of current processing unit $A_{ori}$ in the whole space to be evaluated and the corresponding weights $E_{ori}(A_{ori})$ of pixel group to evaluate the quality of digital images in the space to be evaluated. The final quality of digital image in observation space is:

$$Quality = \sum_{A_{ori} \in W_o, A_{proc} \in W_t''} c \cdot E_{ori}\left(A_{ori}\right) \cdot D_{proc}\left(A_{ori}', A_{proc}\right)$$

And c is a constant, which can be 1.

**Embodiment 47**

The forty-seventh embodiment of the patent relates to a digital image quality evaluation apparatus. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality module of digital images in the space to be evaluated is described as follows:

(1) Distortion generation module, convert current processing unit $A_{proc}$ in the space to be evaluated $W_t$ to the new space to be evaluated $W_t'$, which is the same as reference space $W_{rep}$. Calculate the difference of pixels in pixel group of digital images between the current processing unit $A_{proc}'$ in converted space to be evaluated and the current processing unit $A_{ori}$ in reference space $W_{rep}$, and obtain the distortion value $D_{proc}\left(A_{ori}, A_{proc}'\right)$ in current processing unit $A_{proc}$ by summing the absolute value of differences.

(2) Weighted distortion processing module, map the current processing unit $A_{proc}$ in the space to be evaluated $W_t$ to the observation space, the ratio of area $S(A_{proc})$ in current processing unit $A_{proc}$ of space to be evaluated to observation space $W_o$ can be presented as $E_{proc}(A_{proc})$, and $E_{proc}(A_{proc})$ is relate to the location of $S(A_{proc})$ in the observation space $W_o$, which is not a constant;

(3) The region covered within unit length of current processing unit and center point of current processing unit is marked as $B_{proc}$. Mapping this region into observation space, the area is $S(B_{proc})$. And the ratio of this mapping area on whole sphere is $E_{proc}(A_{proc}) = S(B_{proc})$/whole area on observation space. The distortion value is multiplied by this ratio $E_{proc}(A_{proc})$.

(4) Quality evaluation module, using the processed distortion $D_{proc}\left(A_{ori}, A_{proc}'\right)$ of current processing unit $A_{proc}$

in the whole space to be evaluated and the corresponding weights $E_{proc}(A_{proc})$ of pixel group to evaluate the quality of digital images in the space to be evaluated. The final quality of digital image in observation space is:

$$Quality = \sum_{A_{ori} \in W_o', A_{proc} \in W_t} c \cdot E_{proc}\left(A_{proc}\right) \cdot D_{proc}\left(A_{ori}, A_{proc}'\right)$$

And c is a constant, which can be 1.

## Embodiment 48

The forty-eighth embodiment of the patent relates to a digital image quality evaluation apparatus. Several basic definitions need to be made. The observation space of digital images is $W_o$. The representation space of digital images is $W_t$ and the representation space of reference digital images is $W_{rep}$. The combination of $W_t, W_o$ and $W_{rep}$ can be (ERP, sphere, ERP), (CMP, sphere, ERP), (ERP, sphere, CMP), (CMP, sphere, CMP), (rectangular pyramid, sphere, ERP), (ERP, sphere, rectangular pyramid), (rectangular pyramid, sphere, rectangular pyramid), (N-face format, sphere, M-face format), (ERP, sphere, M-face format) and (M-face format, sphere, ERP). But combinations are not limited to the above examples. The objective quality module of digital images in the space to be evaluated is described as follows:

(1) Distortion generation module, convert current processing unit $A_{proc}$ in the space to be evaluated $W_t$ to the new space to be evaluated $W_t'$, which is the same as reference space $W_{rep}$. Calculate the difference of pixels in pixel group of digital images between the current processing unit $A_{proc}'$ in converted space to be evaluated and the current processing unit $A_{ori}$ in reference space $W_{rep}$, and obtain the distortion value $D_{proc}\left(A_{ori}, A_{proc}'\right)$ in current processing unit $A_{proc}$ by summing the absolute value of differences.

(2) Weighted distortion processing module, map the current processing unit $A_{ori}$ in reference space $W_{rep}$ to the observation space, the ratio of area $S(A_{ori})$ in current processing unit $A_{ori}$ of reference space to observation space $W_o$ can be presented as $E_{ori}(A_{ori})$, and $E_{ori}(A_{ori})$ is relate to the location of $S(A_{ori})$ in the observation space $W_o$, which is not a constant;

(3) The region covered within unit length of current processing unit and center point of current processing unit is marked as $B_{ori}$. Mapping this region into observation space, the area is $S(B_{ori})$. And the ratio of this mapping area on whole sphere is $E_{ori}(A_{ori}) = S(B_{ori})$/whole area on observation space. The distortion value is multiplied by this ratio $E_{ori}(A_{ori})$.

(4) Quality evaluation module, using the processed distortion $D_{proc}\left(A_{ori}, A_{proc}'\right)$ of current processing unit $A_{ori}$ in the whole space to be evaluated and the corresponding weights $E_{ori}(A_{ori})$ of pixel group to evaluate the quality of digital images in the space to be evaluated. The final quality of digital image in observation space is:

$$Quality = \sum_{A_{ori} \in W_o, A_{proc} \in W_t'} c \cdot E_{ori}\left(A_{ori}\right) \cdot D_{proc}\left(A_{ori}', A_{proc}\right)$$

And c is a constant, which can be 1.

## Embodiment 49

The forty-ninth embodiment of the patent relates to a digital image quality evaluation method. Several basic definitions need to be made. The observation space of digital images is $W_o$. The representation space of digital images is $W_t$ and the representation space of reference digital images is $W_{rep}$. $W_t$ and $W_{rep}$ are the same, meaning that the images in reference space and the space to be evaluated share same format and resolution. For example, images in $W_t$ and $W_{rep}$ are both ERP or CMP. The observation space is difference from reference space or the space to be evaluated, e.g., sphere. The objective quality of digital images in the space to be evaluated is calculated as follows:

(1) According to the mapping function between reference space or the space to be evaluated and observation space, the stretching ratio SR(x,y) of each position (x,y) in the space to be evaluated or reference space can be obtained.

And the stretching ratio SR(x,y) is the ratio of mapping micro area $\delta S_{rep}$ of (x,y) in observation space to the micro area $\delta S_{t/o}$ of (x, y) in the space to be evaluated or reference space, i.e., $\delta S_{rep}/\delta S_{t/o}$.

(2) Determine the weight $w$(i,j) of each pixel in (i,j) in the space to be evaluated or reference space. The weight for quality evaluation is the stretching ratio SR(x,y) of each pixel. And the stretching ratio SR(x,y) of each pixel using the stretching ratio of center point in (x,y), which can be obtained according the mapping function between (i,j) and (x,y). It can be derived according to step 1. For example, the weights $w$(i,j) of ERP equal to

$$\cos\frac{(j+0.5-N/2)\pi}{N},$$ and N is the height of image, i.e., number of pixels in vertical direction.

(3) The objective quality of image with resolution of *width * height* is calculated as follows:

$$Quality = \frac{1}{\sum\limits_{i=0}^{width-1}\sum\limits_{j=0}^{height-1} w(\mathrm{i},\mathrm{j})} * \sum\limits_{i=0}^{width-1}\sum\limits_{j=0}^{height-1} w(\mathrm{i},\mathrm{j}) * \mathrm{Diff}(\mathrm{i},\mathrm{j})$$

where *Diff*(i,j) is difference function in(i,j), and difference function can be the sum of the absolute value or mean squared error. The difference function is not limited to the two mentioned above.

**Embodiment 50**

The fiftieth embodiment of the patent relates to a digital image quality evaluation method. Several basic definitions need to be made. The observation space of digital images is $W_o$. The representation space of digital images is $W_t$ and the representation space of reference digital images is $W_{rep}$. $W_t$ and $W_{rep}$ are the same, meaning that the images in reference space and the space to be evaluated share same format and resolution. For example, images in $W_t$ and $W_{rep}$ are both ERP or CMP. The observation space is difference from reference space or the space to be evaluated, e.g., sphere. The objective quality of digital images in the space to be evaluated is calculated as follows:

(1) According to the mapping function between reference space or the space to be evaluated and observation space, the stretching ratio SR(x, y) of each position (x, y) in the space to be evaluated or reference space can be obtained. And the stretching ratio SR(x, y) is the ratio of mapping micro area $\delta S_{rep}$ of (x, y) in observation space to the micro area $\delta S_{t/o}$ of (x, y) in the space to be evaluated or reference space, i.e., $\delta S_{rep} / \delta S_{t/o}$.

(2) Determine the weight $w$(i, j) of each pixel in (i, j) in the space to be evaluated or reference space. The weight for quality evaluation is the stretching ratio SR(x, y) of each pixel. And the stretching ratio SR(x, y) of each pixel using the average stretching ratio of pixel in (x, y), i.e. the region of (w, h): {(w,h)| i-0.5<=w<=i+0.5, j-0.5<=h<=j+0.5}. This can be obtained according the mapping function between (i, j) and (x, y). It can be derived according to step 1. For example, the weights $w$(i, j) of ERP equal to $\cos\dfrac{(j+0.5-N/2)\pi}{N}$, and N is the height of image, i.e., number of pixels in vertical direction.

(3) The objective quality of image with resolution of *width*height* is calculated as follows:

$$Quality = \frac{1}{\sum\limits_{i=0}^{width-1}\sum\limits_{j=0}^{height-1} w(\mathrm{i},\mathrm{j})} * \sum\limits_{i=0}^{width-1}\sum\limits_{j=0}^{height-1} w(\mathrm{i},\mathrm{j}) * \mathrm{Diff}(\mathrm{i},\mathrm{j})$$

where *Diff*(i, j) is difference function in (i, j), and difference function can be the sum of the absolute value or mean squared error. The difference function is not limited to the two mentioned above.

**Embodiment 51**

The fifty-first embodiment of the patent relates to a digital image quality evaluation method. Several basic definitions need to be made. The observation space of digital images is $W_o$. The representation space of digital images is $W_t$ and the representation space of reference digital images is $W_{rep}$. $W_t$ and $W_{rep}$ are the same, meaning that the images in reference space and the space to be evaluated share same format and resolution. For example, images in $W_t$ and $W_{rep}$ are both ERP or CMP. The observation space is difference from reference space or the space to be evaluated, e.g., sphere. The objective quality of digital images in the space to be evaluated is calculated as follows:

(1) According to the mapping function between reference space or the space to be evaluated and observation space, the stretching ratio SR(x, y) of each position (x, y) in the space to be evaluated or reference space can be obtained. And the stretching ratio SR(x, y) is the ratio of mapping micro area $\delta S_{rep}$ of (x, y) in observation space to the micro area $\delta S_{t/o}$ of (x, y) in the space to be evaluated or reference space, i.e., $\delta S_{rep} / \delta S_{t/o}$.

(2) Determine the weight $w(i, j)$ of each pixel in (i, j) in the space to be evaluated or reference space. The weight for quality evaluation is the normalized stretching ratio SR(x, y) of each pixel so the sum of weights is 1. And the stretching ratio SR(x, y) of each pixel using the stretching ratio of center point in (x, y), which can be obtained according the mapping function between (i, j) and (x, y). It can be derived according to step 1.

(3) The objective quality of image with resolution of *width*height* is calculated as follows:

$$Quality = \frac{1}{\sum\limits_{i=0}^{width-1} \sum\limits_{j=0}^{height-1} w(i,j)} * \sum\limits_{i=0}^{width-1} \sum\limits_{j=0}^{height-1} w(i,j) * \text{Diff}(i,j)$$

where *Diff*(i, j) is difference function in(i,j), and difference function can be the sum of the absolute value or mean squared error. The difference function is not limited to the two mentioned above.

**Embodiment 52**

The fifty-second embodiment of the patent relates to a digital image quality evaluation method. Several basic definitions need to be made. The observation space of digital images is $W_o$. The representation space of digital images is $W_t$ and the representation space of reference digital images is $W_{rep}$. $W_t$ and $W_{rep}$ are the same, meaning that the images in reference space and the space to be evaluated share same format and resolution. For example, images in $W_t$ and $W_{rep}$ are both ERP or CMP. The observation space is difference from reference space or the space to be evaluated, e.g., sphere. The objective quality of digital images in the space to be evaluated is calculated as follows:

(1) According to the mapping function between reference space or the space to be evaluated and observation space, the stretching ratio SR(x, y) of each position (x, y) in the space to be evaluated or reference space can be obtained. And the stretching ratio SR(x, y) is the ratio of mapping micro area $\delta S_{rep}$ of (x, y) in observation space to the micro area $\delta S_{t/o}$ of (x, y) in the space to be evaluated or reference space, i.e., $\delta S_{rep} / \delta S_{t/o}$.

(2) Determine the weight $w(i, j)$ of each pixel in (i, j) in the space to be evaluated or reference space. The weight for quality evaluation is the normalized stretching ratio SR(x, y) of each pixel so the sum of weights is 1. And the stretching ratio SR(x, y) of each pixel using the average stretching ratio of pixel in (x, y), i.e. the region of (w,h): {(w, h)|i-0.5<=w<=i+0.5, j-0.5<=h<=j+0.5}. This can be obtained according the mapping function between (i, j) and (x, y). It can be derived according to step 1.

(3) The objective quality of image with resolution of *width*height* is calculated as follows:

$$Quality = \frac{1}{\sum\limits_{i=0}^{width-1} \sum\limits_{j=0}^{height-1} w(i,j)} * \sum\limits_{i=0}^{width-1} \sum\limits_{j=0}^{height-1} w(i,j) * \text{Diff}(i,j)$$

where *Diff*(i, j) is difference function in (i, j), and difference function can be the sum of the absolute value or mean squared error. The difference function is not limited to the two mentioned above.

**Embodiment 53**

The fifty-third embodiment of the patent relates to a digital image quality evaluation apparatus. Several basic definitions need to be made. The observation space of digital images is $W_o$. The representation space of digital images is $W_t$ and the representation space of reference digital images is $W_{rep}$. $W_t$ and $W_{rep}$ are the same, meaning that the images in reference space and the space to be evaluated share same format and resolution. For example, images in

$W_t$ and $W_{rep}$ are both ERP or CMP. The observation space is difference from reference space or the space to be evaluated, e.g., sphere. The objective quality module of digital images in the space to be evaluated is described as follows:

(1) The input of distortion generation module are images in the space to be evaluated and reference space, and output is distortion value. As the space to be evaluated and reference space are the same, the distortion can be directly obtained.

(2) The input of weighted distortion processing module are image format and position, and the output is quality evaluation weights in different position. According to the mapping function between reference space or the space to be evaluated and observation space, the stretching ratio SR(x, y) of each position (x, y) in the space to be evaluated or reference space can be obtained. And the stretching ratio SR(x, y) is the ratio of mapping micro area $\delta S_{rep}$ of (x, y) in observation space to the micro area $\delta S_{t/o}$ of (x, y) in the space to be evaluated or reference space, i.e., $\delta S_{rep}/\delta S_{t/o}$.

(3) Determine the weight w(i, j) of each pixel in (i, j) in the space to be evaluated or reference space. The weight for quality evaluation is the stretching ratio SR(x, y) of each pixel. And the stretching ratio SR(x, y) of each pixel using the stretching ratio of center point in (x, y), which can be obtained according the mapping function between (i, j) and (x, y). It can be derived according to step 1. For example, the weights w(i, j) of ERP equal to

$$\cos\frac{(j+0.5-N/2)\pi}{N}$$, and N is the height of image, i.e., number of pixels in vertical direction.

(4) The input of quality evaluation module are distortion values and weights. And output is the results of quality evaluation. The objective quality of image with resolution of *width*height* is calculated as follows:

$$Quality = \frac{1}{\sum\limits_{i=0}^{width-1}\sum\limits_{j=0}^{height-1} w(\text{i, j})} * \sum\limits_{i=0}^{width-1}\sum\limits_{j=0}^{height-1} w(\text{i, j}) * \text{Diff}(\text{i, j})$$

where *Diff*(i, j) is difference function in (i, j), and difference function can be the sum of the absolute value or mean squared error. The difference function is not limited to the two mentioned above.

**Embodiment 54**

The fifty-fourth embodiment of the patent relates to a digital image quality evaluation apparatus. Several basic definitions need to be made. The observation space of digital images is $W_o$. The representation space of digital images is $W_t$ and the representation space of reference digital images is $W_{rep}$. $W_t$ and $W_{rep}$ are the same, meaning that the images in reference space and the space to be evaluated share same format and resolution. For example, images in $W_t$ and $W_{rep}$ are both ERP or CMP. The observation space is difference from reference space or the space to be evaluated, e.g., sphere. The objective quality module of digital images in the space to be evaluated is described as follows:

(1) The input of distortion generation module are images in the space to be evaluated and reference space, and output is distortion value. As the space to be evaluated and reference space are the same, the distortion can be directly obtained.

(2) The input of weighted distortion processing module are image format and position, and the output is quality evaluation weights in different position. According to the mapping function between reference space or the space to be evaluated and observation space, the stretching ratio SR(x, y) of each position (x, y) in the space to be evaluated or reference space can be obtained. And the stretching ratio SR(x, y) is the ratio of mapping micro area $\delta S_{rep}$ of (x, y) in observation space to the micro area $\delta S_{t/o}$ of (x, y) in the space to be evaluated or reference space, i.e., $\delta S_{rep}/\delta S_{t/o}$.

(3) Determine the weight w(i, j) of each pixel in (i, j) in the space to be evaluated or reference space. The weight for quality evaluation is the stretching ratio SR(x, y) of each pixel. And the stretching ratio SR(x, y) of each pixel using the average stretching ratio of pixel in (x, y), i.e. the region of (w,h): {(w,h)|i-0.5<=w<=i+0.5, j-0.5<=h<=j+0.5}. This can be obtained according the mapping function between (i, j) and (x,y). It can be derived according to step 1. For example, the weights w(i, j) of ERP equal to $\cos\frac{(j+0.5-N/2)\pi}{N}$ , and N is the height of image, i.e., number of pixels in vertical direction.

(4) The input of quality evaluation module are distortion values and weights. And output is the results of quality evaluation. The objective quality of image with resolution of *width*height* is calculated as follows:

$$Quality = \frac{1}{\sum\limits_{i=0}^{width-1}\sum\limits_{j=0}^{height-1} w(i,j)} * \sum\limits_{i=0}^{width-1}\sum\limits_{j=0}^{height-1} w(i,j) * \text{Diff}(i,j)$$

where *Diff*(i, j) is difference function in (i, j), and difference function can be the sum of the absolute value or mean squared error. The difference function is not limited to the two mentioned above.

**Embodiment 55**

The fifty-fifth embodiment of the patent relates to a digital image quality evaluation apparatus. Several basic definitions need to be made. The observation space of digital images is $W_o$. The representation space of digital images is $W_t$ and the representation space of reference digital images is $W_{rep}$. $W_t$ and $W_{rep}$ are the same, meaning that the images in reference space and the space to be evaluated share same format and resolution. For example, images in $W_t$ and $W_{rep}$ are both ERP or CMP. The observation space is difference from reference space or the space to be evaluated, e.g., sphere. The objective quality module of digital images in the space to be evaluated is described as follows:

(1) The input of distortion generation module are images in the space to be evaluated and reference space, and output is distortion value. As the space to be evaluated and reference space are the same, the distortion can be directly obtained.

(2) The input of weighted distortion processing module are image format and position, and the output is quality evaluation weights in different position. According to the mapping function between reference space or the space to be evaluated and observation space, the stretching ratio SR(x, y) of each position (x, y) in the space to be evaluated or reference space can be obtained. And the stretching ratio SR(x,y) is the ratio of mapping micro area $\delta S_{rep}$ of (x, y) in observation space to the micro area $\delta S_{t/o}$ of (x, y) in the space to be evaluated or reference space, i.e., $\delta S_{rep}/\delta S_{t/o}$.

(3) Determine the weight $w(i, j)$ of each pixel in (i, j) in the space to be evaluated or reference space. The weight for quality evaluation is the normalized stretching ratio SR(x, y) of each pixel so the sum of weights is 1. And the stretching ratio SR(x, y) of each pixel using the stretching ratio of center point in (x, y),which can be obtained according the mapping function between (i, j) and (x, y). It can be derived according to step 1. For example, the weights $w(i, j)$ of ERP equal to $\cos\dfrac{(j+0.5-N/2)\pi}{N}$, and N is the height of image, i.e., number of pixels in vertical direction.

(4) The input of quality evaluation module are distortion values and weights. And output is the results of quality evaluation. The objective quality of image with resolution of *width*\**height* is calculated as follows:

$$Quality = \frac{1}{\sum\limits_{i=0}^{width-1}\sum\limits_{j=0}^{height-1} w(i,j)} * \sum\limits_{i=0}^{width-1}\sum\limits_{j=0}^{height-1} w(i,j) * \text{Diff}(i,j)$$

where *Diff*(i, j) is difference function in (i, j), and difference function can be the sum of the absolute value or mean squared error. The difference function is not limited to the two mentioned above.

**Embodiment 56**

The fifty-sixth embodiment of the patent relates to a digital image quality evaluation apparatus. Several basic definitions need to be made. The observation space of digital images is $W_o$. The representation space of digital images is $W_t$ and the representation space of reference digital images is $W_{rep}$. $W_t$ and $W_{rep}$ are the same, meaning that the images in reference space and the space to be evaluated share same format and resolution. For example, images in $W_t$ and $W_{rep}$ are both ERP or CMP. The observation space is difference from reference space or the space to be evaluated, e.g., sphere. The objective quality module of digital images in the space to be evaluated is described as follows:

(1) The input of distortion generation module are images in the space to be evaluated and reference space, and output is distortion value. As the space to be evaluated and reference space are the same, the distortion can be directly obtained.

(2) The input of weighted distortion processing module are image format and position, and the output is quality evaluation weights in different position. According to the mapping function between reference space or the space to be evaluated and observation space, the stretching ratio SR(x, y) of each position (x, y) in the space to be evaluated or reference space can be obtained. And the stretching ratio SR(x, y) is the ratio of mapping micro area $\delta S_{rep}$ of (x, y) in observation space to the micro area $\delta S_{t/o}$ of (x, y) in the space to be evaluated or reference space, i.e., $\delta S_{rep} / \delta S_{t/o}$.
(3) Determine the weight $w$(i, j) of each pixel in (i, j) in the space to be evaluated or reference space. The weight for quality evaluation is the normalized stretching ratio SR(x, y) of each pixel so the sum of weights is 1. And the stretching ratio SR(x, y) of each pixel using the average stretching ratio of pixel in (x, y), i.e. the region of (w,h): {(w, h)|i-0.5<=w<=i+0.5, j-0.5<=h<=j+0.5}. This can be obtained according the mapping function between (i, j) and (x, y). It can be derived according to step 1. For example, the weights $w$(i, j) of ERP equal to

$$\cos\frac{(j+0.5-N/2)\pi}{N},$$ and N is the height of image, i.e., number of pixels in vertical direction.

(4) The input of quality evaluation module are distortion values and weights. And output is the results of quality evaluation. The objective quality of image with resolution of *width*\**height* is calculated as follows:

$$Quality = \frac{1}{\sum\limits_{i=0}^{width-1}\sum\limits_{j=0}^{height-1} w(\mathrm{i,j})} * \sum\limits_{i=0}^{width-1}\sum\limits_{j=0}^{height-1} w(\mathrm{i,j}) * \mathrm{Diff(i,j)}$$

where *Diff*(i, j) is difference function in (i, j), and difference function can be the sum of the absolute value or mean squared error. The difference function is not limited to the two mentioned above.

It should be noted that the above embodiments are only used to illustrate the technical solutions of the present invention, and are not limited the embodiments; although the present invention has been described in detail with the embodiments, ordinary technicians in this field should understand that the technical solutions described in the foregoing embodiments can be modified, or equivalently substituted on some of the technical features; and the modifications or substitutions do not deviate from the scope of the technical solutions of the embodiments of the present invention.

**Claims**

1. A digital image quality evaluation method for measuring the quality of a digital image to be evaluated in observation space, the method comprising:

    summing the absolute value of the pixel values of the respective pixel group of the digital images in the space to be evaluated and the digital images in the reference space pixel by pixel to obtain the distortion values; processing the distortion values of the digital images in the space to be evaluated according to the distribution of pixel groups in observation space; measuring the quality of the digital images in the space to be evaluated by using the distortion value of the pixel groups of the entire digital image to be evaluated after the processing.

2. The method of claim 1, wherein the pixel group comprises at least one of the following expressions:

    a) one pixel;
    b) one set of spatially continuous pixels in the space;
    c) one set of temporally discontinuous pixels in the space.

3. The method of claim 1, wherein the method to obtain the absolute value comprises at least one of the following processing methods:

    a) converting the digital image in the space to be evaluated into the same space as the reference space, after calculating each difference of each pixel value between the corresponding pixel in the pixel group of the digital image in the space to be evaluated and the corresponding pixel in the pixel group of the digital image in the reference space, summing the absolute value of differences calculated before;
    b) converting the digital image in the reference space into the same space as the space to be converted, after calculating each difference of each pixel value between the corresponding pixel in the pixel group of the digital image in the converted reference space and the corresponding pixel in the pixel group of the digital image in the space to be evaluated, summing the absolute value of differences calculated before;

c) converting the digital image in the reference space and the digital image in the space to be evaluated into the same space which is different from the observation space, after calculating each difference between the corresponding pixel value of the pixel group of the digital image in the converted reference space and the corresponding pixel value of the pixel group of the digital image in the space to be evaluated after conversion, summing the absolute value of differences calculated before;

d) in the case where the space to be evaluated is exactly same as the reference space, conversion is not necessary, after calculating each difference between the corresponding pixel value of the pixel group of the digital image in the space to be evaluated and the corresponding pixel value of the pixel group of the digital image in the reference space, summing the absolute value of differences calculated before.

4. The method of claim 1, wherein the method to process the distortion value of the digital images in the space to be evaluated according to the distribution of the pixel groups in observation space comprises at least one of the following processing methods:

a) projecting the relevant area corresponding to the pixel group of digital image in the space to be evaluated into the observation space and calculate the ratio of the corresponding area to the total area of the image in the observation space; calculating the result by multiplying the ratio and the distortion value;

b) projecting the relevant area corresponding to the pixel group of digital image in the space to be evaluated into the observation space corresponding to the pixel group of digital image in the reference space into the observation space and calculate the ratio of the corresponding area to the total area of the image in the observation space; calculating the result by multiplying the ratio and the distortion value.

5. The method of claim 4, wherein the method to locate the relevant area corresponding to the pixel group comprises at least one of the following methods:

a) taking the area of three nearest pixel groups of this pixel group;

b) taking the area of four nearest pixel groups of the pixel group;

c) taking the area enclosed by three nearest pixel groups of the pixel group and the midpoints of these pixel groups;

d) taking the area enclosed by four nearest pixel groups of the pixel group and the midpoints of these pixel groups;

e) taking the area enclosed by the pixel group on each axis that does not exceed the unit distance between the pixels and the pixel group;

f) taking the area enclosed by the midpoint of the pixel group and the pixel group on each axis that does not exceed the unit distance between the pixels and the pixel group;

g) when the pixel group is one pixel, taking the area determined by the micro unit at the center point of the pixel.

6. A digital image quality evaluation apparatus comprising:

a distortion generation module to sum the absolute value of the pixel values of each pixel group of the digital image in the space to be evaluated and the digital image in the reference space pixel by pixel to obtain the distortion value; the input is the reference spatial digital image and the space to be evaluated and the output is distortion corresponding to the pixel group in the space to be evaluated;

a weighted distortion processing module to process the distortion value according to the distribution of the pixel group of the digital image in the space to be evaluated on the observation space, the input of which is the space to be evaluated and the output is the corresponding weights of the pixel group in the space to be evaluated;

a quality evaluation module that uses the processed distortion corresponding to the pixel group of the digital image of the entire image to be evaluated and the corresponding weights of the digital image to evaluate the quality of the digital image to be evaluated; the input is the corresponding weights of the pixel group and the distortion value corresponding to the pixel group in the space to be evaluated, and the output is the quality of the digital image in the observation space.

7. The apparatus of claim 6, wherein the pixel group comprises at least one of the following expressions:

a) one pixel;

b) one set of spatially continuous pixels in the space;

c) one set of temporally discontinuous pixels in the space.

8. The apparatus of claim 6, wherein the method to obtain the absolute value of the pixel values comprises at least one of the following processing methods:

a) converting the digital image in the space to be evaluated into the same space as the reference space, after calculating each difference between the corresponding pixel value of the pixel group of the digital image in the space to be evaluated and the corresponding pixel value of the pixel group of the digital image in the reference space, summing the absolute value of differences calculated before;

b) converting the digital image in the reference space into the same space as the space to be converted, after calculating each difference between the corresponding pixel value of the pixel group of the digital image in the converted reference space and the corresponding pixel value of the pixel group of the digital image in the space to be evaluated, summing the absolute value of differences calculated before;

c) converting the digital image in the reference space and the digital image in the space to be evaluated into the same space which is different with the observation space, after calculating each difference between the corresponding pixel value of the pixel group of the digital image in the converted reference space and the corresponding pixel value of the pixel group of the digital image in the space to be evaluated after conversion, summing the absolute value of differences calculated before;

d) in the case where the space to be evaluated is exactly same as the reference space, conversion is not necessary, after calculating each difference between the corresponding pixel value of the pixel group of the digital image in the space to be evaluated and the corresponding pixel value of the pixel group of the digital image in the reference space, summing the absolute value of differences calculated before.

9. The apparatus of claim 6, wherein the module to process the distortion value according to the distribution in the observation space of the pixel group of the digital image in the space to be evaluated comprises at least one of the following processing methods:

a) projecting the relevant area corresponding to the pixel group of digital image in the space to be evaluated into the observation space and calculate the ratio of the corresponding area to the total area of the image in the observation space; calculating the result by multiplying the ratio and the distortion value;

b) projecting the relevant area corresponding to the pixel group of digital image in the space to be evaluated into the observation space corresponding to the pixel group of digital image in the reference space into the observation space and calculate the ratio of the corresponding area to the total area of the image in the observation space; calculating the result by multiplying the ratio and the distortion value.

10. The apparatus of claim 9, wherein the method to locate the relevant area corresponding to the pixel group comprises at least one of the following methods:

a) taking the area of three nearest pixel groups of this pixel group;

b) taking the area of four nearest pixel groups of the pixel group;

c) taking the area enclosed by three nearest pixel groups of the pixel group and the midpoints of these pixel groups;

d) taking the area enclosed by four nearest pixel groups of the pixel group and the midpoints of these pixel groups;

e) taking the area enclosed by the pixel group on each axis that does not exceed the unit distance between the pixels and the pixel group;

f) taking the area enclosed by the midpoint of the pixel group and the pixel group on each axis that does not exceed the unit distance between the pixels and the pixel group;

g) when the pixel group is one pixel, taking the area determined by the micro unit at the center point of the pixel.

11. A digital image quality evaluation method for measuring the quality of a digital image to be evaluated in observation space of a digital image to be evaluated, the method comprising:

obtaining the distortion values of each pixel group in the digital image by using the pixel values of the respective pixel groups of the digital images in the space to be evaluated and reference space; processing the distortion values of the pixel groups of the digital images in the space to be evaluated according to the distribution in observation space; measuring the quality of the digital images in the space to be evaluated by using the distortion value of the pixel group of the entire digital image to be evaluated after the processing.

12. The method of claim 11, wherein the method to obtain the distortion values of each pixel group in the digital image comprises at least one of the following processing methods:

a) converting the digital image in the space to be evaluated into the same space as the reference space, after calculating each difference between the corresponding pixel value of the pixel group of the digital image in the space to be evaluated and the corresponding pixel value of the pixel group of the digital image in the reference space, summing the absolute value of differences calculated before;

b) converting the digital image in the reference space into the same space as the space to be converted, after calculating each difference between the corresponding pixel value of the pixel group of the digital image in the converted reference space and the corresponding pixel value of the pixel group of the digital image in the space to be evaluated, summing the absolute value of differences calculated before;

c) converting the digital image in the reference space and the digital image in the space to be evaluated into the same space which is different with the observation space, after calculating each difference between the corresponding pixel value of the pixel group of the digital image in the converted reference space and the corresponding pixel value of the pixel group of the digital image in the space to be evaluated after conversion, summing the absolute value of differences calculated before;

d) in the case where the space to be evaluated is exactly the same as the reference space, conversion is not necessary; after calculating each difference between the corresponding pixel value of the pixel group of the digital image in the space to be evaluated and the corresponding pixel value of the pixel group of the digital image in the reference space, summing the absolute value of differences calculated before.

13. The method of claim 11, wherein the method to process the distortion values of the pixel groups of the digital images in the space to be evaluated according to the distribution in observation space comprises at least one of the following processing methods:

a) projecting the relevant area corresponding to the pixel group of digital image in the space to be evaluated into the observation space and calculate the ratio of the corresponding area to the total area of the image in the observation space; calculating the result by multiplying the ratio and the distortion value, the result is the processed distortion value;

b) projecting the relevant area corresponding to the pixel group of digital image in the space to be evaluated into the observation space and calculate the stretching ratio of the pixel group of digital image in the space to be evaluated; calculating the result by multiplying the stretching ratio and the distortion value, the result is the processed distortion value.

14. The method of claim 13, wherein the method to locate the relevant area corresponding to the pixel group comprises at least one of the following methods:

a) taking the area of three nearest pixel groups of this pixel group;

b) taking the area of four nearest pixel groups of the pixel group;

c) taking the area enclosed by three nearest pixel groups of the pixel group and the midpoints of these pixel groups;

d) taking the area enclosed by four nearest pixel groups of the pixel group and the midpoints of these pixel groups;

e) taking the area enclosed by the pixel group on each axis that does not exceed the unit distance between the pixels and the pixel group;

f) taking the area enclosed by the midpoint of the pixel group and the pixel group on each axis that does not exceed the unit distance between the pixels and the pixel group;

g) when the pixel group is one pixel, taking the area determined by the micro unit at the center point of the pixel.

15. A digital image quality evaluation apparatus comprising:

a distortion generation module to obtain the distortion value of the pixel values of each pixel group in the digital image to be evaluated pixel by pixel with the corresponding pixel values of the digital image in the reference space; the input is the digital images in reference space and the space to be evaluated and the output is distortion values for the pixel group in the space to be evaluated;

a weighted distortion processing module to process the distortion value of the pixel group of the digital image in the space to be evaluated according to the distribution in the observation space, the input of which are the distribution of pixel group in the digital image to be evaluated and the observation space, and the output is the corresponding weights of the pixel group in the space to be evaluated;

a quality evaluation module that uses the processed distortion corresponding to the pixel group of the digital image of the entire image to be evaluated and the corresponding weights of the digital image are utilized to measure the quality of the digital image to be evaluated; the input is the corresponding weights of the pixel group and the distortion values corresponding to the pixel group in the space to be evaluated, and the output is the quality of the digital image in the observation space.

16. The apparatus of claim 15, wherein the method to obtain the distortion value of the pixel values comprises at least one of the following processing methods:

  a) converting the digital image in the space to be evaluated into the same space as the reference space, after calculating each difference between the corresponding pixel value of the pixel group of the digital image in the space to be evaluated and the corresponding pixel value of the pixel group of the digital image in the reference space, summing the absolute value of differences calculated before;
  b) converting the digital image in the reference space into the same space as the space to be converted, after calculating each difference between the corresponding pixel value of the pixel group of the digital image in the converted reference space and the corresponding pixel value of the pixel group of the digital image in the space to be evaluated, summing the absolute value of differences calculated before;
  c) converting the digital image in the reference space and the digital image in the space to be evaluated into the same space which is different with the observation space, after calculating each difference between the corresponding pixel value of the pixel group of the digital image in the converted reference space and the corresponding pixel value of the pixel group of the digital image in the space to be evaluated after conversion, summing the absolute value of differences calculated before;
  d) in the case where the space to be evaluated is exactly same as the reference space, conversion is not necessary, after calculating each difference between the corresponding pixel value of the pixel group of the digital image in the space to be evaluated and the corresponding pixel value of the pixel group of the digital image in the reference space, summing the absolute value of differences calculated before.

17. The apparatus of claim 15, wherein the module to process the distortion value of the pixel group of the digital image in the space to be evaluated according to the distribution in the observation space comprises at least one of the following processing methods:

  a) projecting the relevant area corresponding to the pixel group of digital image in the space to be evaluated into the observation space and calculate the ratio of the corresponding area to the total area of the image in the observation space; calculating the result by multiplying the ratio and the distortion value, the result is the processed distortion value;
  b) projecting the relevant area corresponding to the pixel group of digital image in the space to be evaluated into the observation space and calculate the stretching ratio of the pixel group of digital image in the space to be evaluated; calculating the result by multiplying the stretching ratio and the distortion value, the result is the processed distortion value.

18. The apparatus of claim 17, wherein the method to locate the relevant area corresponding to the pixel group comprises at least one of the following methods:

  a) taking the area of three nearest pixel groups of this pixel group;
  b) taking the area of four nearest pixel groups of the pixel group;
  c) taking the area enclosed by three nearest pixel groups of the pixel group and the midpoints of these pixel groups;
  d) taking the area enclosed by four nearest pixel groups of the pixel group and the midpoints of these pixel groups;
  e) taking the area enclosed by the pixel group on each axis that does not exceed the unit distance between the pixels and the pixel group;
  f) taking the area enclosed by the midpoint of the pixel group and the pixel group on each axis that does not exceed the unit distance between the pixels and the pixel group;
  g) when the pixel group is one pixel, taking the area determined by the micro unit at the center point of the pixel.

$R \cdot (\sin\theta\cos\varphi, \sin\varphi, \cos\theta\cos\varphi)$

(a)

(b)

Figure 1

(a)

(b)

Figure 2

Digital image in the reference space

Digital image in the space to be evaluated

Distortion generation module

Observation space

Weighted distortion processing module

Quality evaluation module

Quality evaluation results

Figure 3

# INTERNATIONAL SEARCH REPORT

International application No.

**PCT/CN2017/083264**

## A. CLASSIFICATION OF SUBJECT MATTER

H04N 17/00(2006.01) i

According to International Patent Classification (IPC) or to both national classification and IPC

## B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNPAT, WPI, EPODOC, CNKI, IEEE: three-dimensional, stereoscopic,measurement, digital, image, 3D, sphere, quality, assess+, evaluat+, space, spatial, distortion, pixel, difference, absolut+, sum, weight, convert+, project+, map+, area, ratio, distribution

## C. DOCUMENTS CONSIDERED TO BE RELEVANT

| Category* | Citation of document, with indication, where appropriate, of the relevant passages | Relevant to claim No. |
|---|---|---|
| A | CN 102209257 A (NINGBO UNIVERSITY), 05 October 2011 (05.10.2011),abstract, and description, paragraphs [0005]-[0012] | 1-18 |
| A | CN 102163343 A (XI'AN JIAOTONG UNIVERSITY), 24 August 2011 (24.08.2011), the whole document | 1-18 |
| A | CN 105528776 A (SHANGHAI XIANMENG SOFTWARE TECHNOLOGY CO., LTD.), 27 April 2016 (27.04.2016), the whole document | 1-18 |
| A | CN 101695141 A (ZHEJIANG UNIVERSITY), 14 April 2010 (14.04.2010), the whole document | 1-18 |
| A | EP 2889833 A1 (THOMSON LICENSING), 01 July 2015 (01.07.2015), the whole document | 1-18 |

☐ Further documents are listed in the continuation of Box C.       ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 13July 2017 (13.07.2017) | **27 July 2017 (27.07.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LI, Yukun** Telephone No.:(86-10) **62414421** |
|---|---|

Form PCT/ISA/210 (second sheet) (July 2009)

## INTERNATIONAL SEARCH REPORT
### Information on patent family members

International application No.

**PCT/CN2017/083264**

| Patent Documents referred in the Report | Publication Date | Patent Family | Publication Date |
|---|---|---|---|
| CN 102209257 A | 05 October 2011 | None | |
| CN 102163343 A | 24 August 2011 | None | |
| CN 105528776 A | 27 April 2016 | None | |
| CN 101695141 A | 14 April 2010 | None | |
| EP 2889833 A1 | 01 July 2015 | None | |

Form PCT/ISA/210 (patent family annex) (July 2009)